(19) Europäisches Patentamt
European Patent Office
Office européen des brevets

(11) **EP 3 353 444 B1**

(12) **EUROPÄISCHE PATENTSCHRIFT**

(45) Veröffentlichungstag und Bekanntmachung des Hinweises auf die Patenterteilung:
**15.01.2020 Patentblatt 2020/03**

(21) Anmeldenummer: **16760718.3**

(22) Anmeldetag: **06.09.2016**

(51) Int Cl.:
**F16F 9/34** (2006.01)     **F16F 9/04** (2006.01)

(86) Internationale Anmeldenummer:
**PCT/EP2016/070908**

(87) Internationale Veröffentlichungsnummer:
**WO 2017/050556 (30.03.2017 Gazette 2017/13)**

(54) **DÄMPFERVENTIL UND LUFTFEDER**

DAMPING VALVE AND AIR SPRING

VALVE D'AMORTISSEMENT ET RESSORT A AIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2015 DE 102015115853**

(43) Veröffentlichungstag der Anmeldung:
**01.08.2018 Patentblatt 2018/31**

(73) Patentinhaber: **KNORR-BREMSE Systeme für Nutzfahrzeuge GmbH**
**80809 München (DE)**

(72) Erfinder: **MILLER, Bernhard**
**71263 Weil der Stadt (DE)**

(56) Entgegenhaltungen:
**WO-A1-2013/181241     DE-A1-102010 045 567**
**US-A1- 2007 023 981**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung bezieht sich auf ein Dämpferventil und eine Luftfeder, die beispielsweise bei einer Luftfederung eines Fahrzeugs eingesetzt werden können.

Bewegungen von Fahrzeugachsen und Fahrzeugaufbauten können durch eine Luftfeder gedämpft werden. Eine solche Luftfeder weist einen Luftfedertopf und einen Luftfederbalg auf, die durch ein Dämpferventil voneinander getrennt sind.

Die DE 10 2007 056 687 A1 beschreibt eine Luftfeder. Die Luftfeder weist ein Gehäuse auf, an das ein Zylinder mit einer Ausnehmung angeformt ist. In dem Zylinder ist eine Kolbenstange mit einer radialen Bohrung verschiebbar gelagert. Durch die Ausnehmung wird als Abschnitt eines Bypass ein Spalt zwischen dem Zylinder und der Kolbenstange gebildet. Der Bypass ist bei einer Verschiebung der Kolbenstange in Richtung des Gehäuses verschlossen und sonst geöffnet.

Die DE 102 50 143 A1 beschreibt ein Luftfederungssystem eines Kraftfahrzeugs. Das Luftfederungssystem weist einen Ventilkörper mit Verbindungsdurchlässen auf. Eine Verbindungsstange mit einem Blockierteil ist gleitend in einen der Verbindungsdurchlässe eingesetzt. Wird die Luftfeder im Normalzustand betrieben, so blockiert das Blockierteil die Verbindungsdurchlässe. Ist die Luftfeder dagegen zusammengedrückt oder expandiert, so werden die Verbindungsdurchlässe freigegeben.

Die DE 43 27 585 A1 beschreibt eine Luftfeder mit einem Abrollkolben mit einer Öffnung, durch die ein mit einer Feder verbundenes Verschlussteil geführt ist.

Die DE 10 2010 045 567 B4 beschreibt ein Dämpferventil zum Dämpfen einer Relativbewegung zwischen einer ersten Masse und einer zweiten Masse gemäß dem Oberbegriff des Anspruchs 1.

Aus der WO 2013/181241 A1 geht eine Gasfeder- und Gasdämpferanordnung hervor, bei der gegenüberliegende Endglieder und ein flexibles Federglied vorgesehen sind, zwischen denen zumindest teilweise eine Federkammer ausgebildet ist.

Aus der US 2007/023981 A1 ist ein Gasfedersystem für Radaufhängungen mit einem rohrförmigen Rollbalg bekannt, der zwischen einem radtragenden Element und dem Fahrzeugaufbau angeordnet ist. Zwischen einem Tragelement und einem Aufrollkolben ist ein druckdichter Rollraum vorgesehen, wobei das Tragelement und der Aufrollkolben über ein zentrales Druckstück aneinander geführt sind und weiter ein Steuerrohr an einem Stützelement angeordnet ist. Darüber hinaus sind Überströmkanäle vorgesehen und ein Hohlraum des Aufrollkolbens weist einen Steuerbund auf, der mit Steuerspiel das Steuerrohr zumindest in Bereichen des Hubs der Steuerung der Gasströmung zwischen dem Balginneren und dem Hohlraum in Abhängigkeit vom Federungshub beeinflusst.

Es ist die Aufgabe der vorliegenden Erfindung ein verbessertes Dämpferventil und eine verbesserte Luftfeder zu schaffen.

Diese Aufgabe wird durch ein Dämpferventil zum Dämpfen einer Relativbewegung zwischen einer ersten Masse und einer zweiten Masse und durch eine Luftfeder gemäß den unabhängigen Ansprüchen gelöst.

Kern der vorliegenden Erfindung ist ein weggesteuertes passives Luftdämpferventil. Das Dämpferventil zeichnet sich durch eine hohe Dämpfleistung aufgrund eines großen Schaltquerschnitts und ein präzises, rein wegabhängiges Ventilschalten aus. Zudem ist ein einfacher und robuster sowie kostengünstiger Aufbau realisierbar.

Erfindungsgemäß ist vorgesehen, dass das Dämpferventil einen Ventilboden aufweist, der mit dem Ventilgehäuse und dem Ventilkörper verbunden ist und wobei der Ventilboden druckabhängig verstellbar ist.

Die Erfindung basiert auf dem Grundgedanken, dass durch ein bewegliches Ventilelement auch bei großen auszugleichenden Bewegungen, d.h. beispielsweise in Fällen in denen aufgrund großer (Schwingungs-)Amplitude eine hohe Dämpfungsleistung erforderlich ist und ein Hub des Dämpfungselements von wenigen Millimetern nicht ausreicht, der Ausgleich von Dämpfungsmedium, z.B. Luft, erfolgen kann. So ermöglicht das bewegliche Ventilelement einen Ausgleich von einer vergleichsweise größeren Menge an Dämpfungsmedium (z.B. Luft), als dies bei vergleichbaren Dämpferventilen ohne bewegliches Ventilelement, z.B. durch einen beweglichen Ventilboden, möglich wäre.

Dabei kann vorgesehen sein, dass durch den beweglichen Ventilboden das Dämpferventil solange geöffnet ist, bis der Druckausgleich vorgenommen wurde.

Denkbar ist insbesondere, dass der Ventilboden abhängig vom Differenzdruck höhenverstellbar ist und ein vorzeitiges Schließen des Dämpferventils verhindert, bis der Druckausgleich abgeschlossen ist.

Diese Bauweise eines Dämpferventils ermöglicht auch eine Verkleinerung des Querschnitts des Ventilkörpers bei gleicher bzw. vergleichbarer Dämpfungsleistung des Dämpferventils verglichen mit herkömmlichen Dämpferventilen.

Insgesamt wird es dadurch möglich, die Materialkosten zu senken und Leckagen zu verringern.

Der Ventilboden kann axial beweglich, insbesondere entlang der Längsachse des Dämpferventils beweglich sein.

Die Funktionsweise des weggesteuerten Luftdämpferventils besteht darin, dass das Ventil kurz nach einem jeweiligen Wegwendepunkt öffnet. Eine, beispielsweise mit einem Fahrzeugaufbau verbundene, längenänderbare Verbindung ist über eine Reibfläche mit dem Ventilkörper verbunden. Die längenänderbare Verbindung kann beispielsweise teleskopisch ausgeführt sein. Bei einer Änderung des Einfederwegs bewegt sich das Ventilgehäuse, das beispielsweise eine Verbindung zur Fahrzeugachse aufweist, gegenüber dem Ventilkörper, der beispielsweise vom Fahrzeugaufbau gehalten wird. Das Ventil ist in der Mittelstellung geöffnet und an einem jeweiligen Bewegungsanschlag geschlossen. Das Ventil kann eine längenänderbare Verbindung mit beispielsweise 45 cm Hub bei ca. 15 cm Einbautiefe ermöglichen. Dazu können beispielswiese ein mehrfach teleskopartiges Winkel- oder Rundprofil oder zwei sich gegenphasig drehende Seilzugrollen mit berührenden Reibflächen eingesetzt werden.

Wird lediglich im sogenannten Fahrniveau eine Dämpfungsfunktion benötigt, so genügt ein einfacher Stab, welcher mittels Federkraft nach oben gegen den Fahrzeugaufbau gedrückt wird und während des Stillstands bei Verstellung in ein Hochniveau abheben kann.

Die vorliegende Erfindung schafft ein Dämpferventil zum Dämpfen einer Relativbewegung zwischen einer ersten Masse und einer zweiten Masse, mit folgenden Merkmalen: einem Ventilgehäuse mit einer Gehäusewand die Ventilöffnungen aufweist, wobei das Ventilgehäuse ausgebildet ist, um mit der ersten Masse verbunden zu werden; einem Ventilkörper der Durchgangsöffnungen aufweist und innerhalb des Ventilgehäuses zwischen einer ersten Auslenkungsposition und einer zweiten Auslenkungsposition beweglich angeordnet ist, wobei die Durchgangsöffnungen so angeordnet sind, dass die Ventilöffnungen durch den Ventilkörper verschlossen sind, wenn der Ventilkörper zu der ersten oder der zweiten Auslenkungsposition hin ausgelenkt ist und sich die Ventilöffnungen und die Durchgangsöffnungen zumindest teilweise überlappen, wenn sich der Ventilkörper in einer Zwischenstellung zwischen der ersten und der zweiten Auslenkungsposition befindet; einem Befestigungselement, das mit dem Ventilkörper verbunden ist; und einem Koppelelement, das ein erstes Ende aufweist, das mit dem Befestigungselement verbunden ist und ein zweites Ende aufweist, das ausgebildet ist, um mit der zweiten Masse verbunden zu werden.

Das Dämpferventil kann beispielsweise bei einem Nutzfahrzeug eingesetzt werden, um eine Relativbewegung zwischen einer Achse und einem Aufbau des Fahrzeugs zu dämpfen. Somit kann es sich bei der ersten Masse um eine Fahrzeugachse oder einen mit der Fahrzeugachse verbundenen Lenker handeln. Bei der zweiten Masse kann es sich um einen Fahrzeugaufbau oder einen mit dem Fahrzeugaufbau verbundenen Träger handeln. Mittels des Dämpferventils kann eine Bewegung gedämpft werden, bei der sich die erste und die zweite Masse aufeinander zu oder voneinander weg bewegen. Zur Dämpfung der Relativbewegung zwischen den Massen kann ein flexibler Fluidbehälter, beispielsweise ein Federbalg, eingesetzt werden und das Dämpferventil kann ausgebildet sein, um einen in dem Fluidbehälter herrschenden Druck abhängig von einer Auswirkung des Verlauf der Relativbewegung auf den Fluidbehälter anzupassen. Dazu kann das Dämpferventil zu vorbestimmten Abschnitten des Verlaufs der Relativbewegung einen Fluidstrom in den Fluidbehälter hinein oder aus dem Fluidbehälter hinaus ermöglichen oder aber unterbinden. Es ist keine elektronische Steuerungseinrichtung zum Ansteuern des Dämpferventils erforderlich. Beispielsweise kann das Dämpferventil im Zusammenhang mit einer Luftfeder eingesetzt werden. Somit kann es sich bei dem Fluid, das durch Öffnungen des Dämpferventils strömen kann, um ein Gas und insbesondere um Luft handeln. Die Gehäusewand des Ventilgehäuses kann zylinderförmig sein. Die Ventilöffnungen können gleichmäßig oder ungleichmäßig über eine Fläche der Gehäusewand verteilt sein. Dabei können mehrere Ventilöffnungen sowohl entlang einer Höhe der Gehäusewand als auch entlang eines Umfangs der Gehäusewand benachbart zueinander angeordnet sein. Die Ventilöffnungen können eine beliebige geeignete Form aufweisen. Dabei können alle Ventilöffnungen dieselbe Form aufweisen. Die Abstände zwischen benachbarten Ventilöffnungen können gleich groß sein. Der Ventilkörper kann einen Hohlkörper darstellen. Beispielsweise kann der Ventilkörper zylinderförmig sein. Der Ventilkörper kann so ausgeformt sein, das eine äußere Fläche des Ventilkörpers eine innere Fläche der Gehäusewand berührt, so dass zwischen gegenüberliegenden Flächen des Ventilkörpers und des Ventilgehäuses kein oder lediglich ein vernachlässigbar kleiner Fluidstrom möglich ist. Dabei können sich die äußere Fläche des Ventilkörpers und die innere Fläche der Gehäusewand direkt oder über eine oder mehrere Gleitflächen berühren. Der Ventilkörper und die Gehäusewand sind so ausgebildet und so angeordnet, dass sich der Ventilkörper und die Gehäusewand möglichst reibungsfrei relativ zueinander bewegen können. Eine Relativbewegung zwischen dem Ventilkörper und der Gehäusewand kann entlang einer Längserstreckungsrichtung des Dämpferventils erfolgen. Ein Anordnungsmuster der Durchgangsöffnungen kann einem Anordnungsmuster der Ventilöffnungen entsprechen. Über das Koppelelement kann der Ventilkörper mit der zweiten Masse verbunden werden. Das Koppelelement kann in seiner Länge variabel sein, so dass ein sich aufgrund der Relativbewegung der Massen verändernder Abstand zwischen der ersten und der zweiten Masse mittels des Koppelements ausgeglichen werden kann. Dazu kann das Koppelelement entweder teleskopartig ausgeführt sein, so dass es selbst in seiner Länge veränderbar ist oder es kann flexibel ausgeführt sein, so dass es zumindest teilweise, beispielsweise von dem Befestigungselement, aufgerollt oder eingezogen werden kann. Auch kann das Koppelelement mittels einer Feder ausgedrückt werden, um bei Überschreitung seiner maximalen Längenausdehnung abzuheben. Um eine Veränderung der Länge des Koppelelements zu bewirken kann es erforderlich sein, eine Haftkraft oder Reibkraft zu überwinden. Dadurch kann gewährleistet werden, dass eine Veränderung der Länge des Koppelelements erst dann erfolgt, wenn keine weitere Verschiebung des Ventilkörpers gegenüber dem Ventilgehäuse mehr möglich ist. Die Haftkraft oder Reibkraft kann über eine Reibfläche des Befestigungselements erzeugt werden. Je nach Ausführungsform des Befestigungselements und des Koppelelements kann die Reibfläche unterschiedlich gestaltet sein. Die Reibfläche kann zwischen einzelnen Teilen des Befestigungselements oder zwischen einem Abschnitt des Befestigungselements und einem Abschnitt des Koppelelements angeordnet sein.

Des Weiteren kann vorgesehen sein, dass der Ventilboden eine Führung aufweist, in der der Ventilkörper geführt ist. Dadurch ergibt sich der Vorteil, dass die Relativbewegung des Ventilbodens und des Ventilkörpers zueinander eingestellt werden kann. Durch die Führung wird einfach und sicher die Beweglichkeit von Ventilboden und Ventilkörper zueinander eingestellt.

Darüber hinaus ist möglich, dass die Führung einen Kragen aufweist, der den Ventilkörper zumindest teilweise umgreift. Dadurch wird verhindert, dass sich der Ventilboden von dem Ventilkörper lösen kann. Des Weiteren kann durch den Kragen ein Anschlag bereit gestellt werden, die die Maximalbewegung des Ventilbodens relativ zum Ventilkörper in einer Richtung begrenzen kann.

Außerdem kann vorgesehen sein, dass der Ventilboden einen Ventilgehäusekragen aufweist, der das Ventilgehäuse zumindest teilweise umgreift. Dadurch wird verhindert, dass sich der Ventilboden von dem Ventilgehäuse lösen kann. Des Weiteren kann durch den Kragen ein Anschlag bereit gestellt werden, die die Maximalbewegung des Ventilbodens relativ zum Ventilgehäuse in einer Richtung begrenzen kann.

Der Ventilboden kann als Tiefziehteil ausgebildet sein. Dies ermöglicht eine einfache und genaue Fertigung des Ventilbodens, insbesondere auch stabil und zugleich in Leichtbauweise. Der Ventilboden kann weiter eine Ringscheibe aufweisen.

Denkbar ist, dass der Ventilboden aus einem Tiefziehblech, insbesondere aus einem Tiefziehblech mit einer angeschweißten Ringscheibe besteht.

Ferner kann ein Gleitlager, insbesondere ein Kunststoffgleitlager, vorgesehen sein, mittels dessen der Ventilkörper führbar und/oder steuerbar ist. Durch ein Kunstoffgleitlager kann der Ventilkörper bzw. das bewegliche innere Ventilelement geführt und gesteuert werden. Hierdurch kann im geschlitzten Bereich der Ventilkörper durch eine Federkraft gegen die Steuerstange des Dämpferventils gedrückt werden, wodurch eine dauerhafte Mindestreibung sichergestellt wird.

Denkbar ist insbesondere, dass das Kunststoffgleitlager einen oder mehrere Federstege aufweist.

Gemäß einer Ausführungsform kann das Befestigungselement eine Reibfläche aufweisen und das Koppelelement kann zumindest zwei in einer Längserstreckungsrichtung des Koppelelements gegeneinander verschiebbare Stäbe aufweisen. Dabei kann ein an dem ersten Ende des Koppelelements angeordneter Stab über die Reibfläche in der Längserstreckungsrichtung beweglich mit dem Befestigungselement verbunden sein. Somit kann eine Längenänderung zum einen durch eine Verschiebung des Koppelelements gegenüber dem Befestigungselement und zum anderen durch ein Auseinanderziehen oder Zusammendrücken des Koppelements realisiert werden.

Dabei können das Befestigungselement und die Stäbe so ausgeführt sein, dass einer Verschiebung der Stäbe gegeneinander in der Längserstreckungsrichtung eine größere Reibung entgegensteht als einer Bewegung des an dem ersten Ende des Koppelelements angeordneten Stabs entlang der Reibfläche in der Längserstreckungsrichtung. Auf diese Weise kann gewährleistet werden, dass die Längenänderung zuerst durch eine Verschiebung des Koppelelements gegenüber dem Befestigungselement und erst danach durch das Auseinanderziehen oder Zusammendrücken des Koppelements erfolgt. Die jeweiligen Reibkräfte können durch eine geeignete Materialwahl und Oberflächenbeschaffenheit der aneinander reibenden Berührungsflächen sowie eine Größe der die Berührungsflächen aneinanderdrückenden Kraft eingestellt werden.

Beispielsweise kann das Teleskopelement eine Mehrzahl von in der Längserstreckungsrichtung des Teleskopelements gegeneinander verschiebbare Winkelprofile aufweisen. Winkelprofile weisen eine hohe Formstabilität auf.

Gemäß einer weiteren Ausführungsform kann das Koppelelement mindestens ein Seil oder einen Riemen umfassen. Das Seil oder der Riemen können aus Kunststoff sein. Eine Längenänderung des Koppelelements lässt sich dabei auf einfache Weise realisieren, indem ein Ende des Seils oder Riemens aufgerollt oder abgerollt wird.

Dazu kann das Befestigungselement zumindest eine Spiraltrommel und zumindest eine Triebfeder aufweisen. Die Triebfeder kann ausgebildet sein, um eine Drehung der Spiraltrommel um eine mit dem Ventilkörper verbundene Drehachse zu bewirken, um das Koppelelement mit dem ersten Ende voran auf die Spiraltrommel aufzuwickeln. Entfernen sich die erste und die zweite Masse voneinander, so kann das Seil oder der Riemen aufgrund der auftretenden Zugkraft wieder von der Spiraltrommel abgewickelt werden. Die entsprechende Drehung der Spiraltrommel wird auf die Triebfeder übertragen, die dadurch wieder gespannt wird. Bei einem Nachlassen der Zugkraft kann die Triebfeder ein erneutes Aufwickeln des Seils oder Riemens bewirken.

Das Koppelelement kann zwei Seile oder Riemen und das Befestigungselement zwei Spiraltrommeln umfassen. Dabei können die zwei Spiraltrommeln entgegengesetzte Drehrichtungen aufweisen und über mindestens eine Reibverbindung miteinander verbunden sein. Über die Reibverbindung kann gewährleistet werden, dass eine Drehung der Spiraltrommeln erst dann einsetzt, wenn keine weitere Verschiebung des Ventilkörpers gegenüber dem Ventilgehäuse mehr möglich ist. Bei Verwendung von zwei Spiraltrommeln entgegengesetzter Drehrichtungen kann die Übertragung eines Drehmoments auf den Ventilkörper vermieden werden, welches wiederum eine Minimierung der Reibkräfte während der Ventilbewegungen ermöglicht.

Das Koppelement kann weitere Seile oder Riemen aufweisen, wobei für jedes Seil und jeden Riemen eine eigene Spiraltrommel vorgesehen sein kann.

Die mindestens eine Spiraltrommel kann eine konische Aufnahmefläche für das erste Ende des Koppelelements aufweisen. Auf diese Weise kann ein von dem Koppelelement auf die Spiraltrommel ausgeübtes Drehmoment an eine umdrehungsabhängige Rückstellkraft der Triebfeder angepasst werden, so dass trotz steigender Federrückstellkraft unabhängig von der Abrolllänge des Seils eine konstante Seilzugkraft ermöglicht wird.

Des Weiteren kann das Koppelelement aus einem z.B. runden Stab bestehen, welcher mittels einer Feder gegen eine Deckelplatte gedrückt wird. Da lediglich während des Entladens von Fahrzeugen ein hohes Fahrzeugniveau benötigt wird, ist es nicht notwendig, dass in dieser Stellung eine Fahrzeugdämpfung benötigt wird. Daher kann sich in einer solchen Hochniveauposition das Koppelelement von der Deckelplatte lösen. Auf ein teleskopartiges Koppelelement kann hierbei ggf. verzichtet werden. Es genügt, wenn das Koppelelement den jeweiligen Einfederweg im Niveaubereich des Fahrniveaus an das Ventilelement überträgt.

Generell können die Ventilöffnungen in mehreren Spalten und mehreren Reihen in der Gehäusewand angeordnet sein. Entsprechend dazu können die Durchgangsöffnungen in mehreren Spalten und mehreren Reihen in dem Ventilkörper angeordnet sein.

Das Dämpferventil kann einen spiralförmigen Strömungskanal aufweisen, der die Gehäusewand des Ventilgehäuses zumindest im Bereich der Ventilöffnungen umgibt. Durch den Strömungskanal kann ein Strömungsverhalten eines durch das Dämpfungsventil strömenden Fluidstroms vorteilhaft beeinflusst werden.

Des Weiteren kann vorgesehen sein, dass das Dämpferventil mittels eines Koppelelements steuerbar ist, welches mittels einer Feder gegen die zweite Masse gedrückt wird.

Darüber hinaus kann vorgesehen sein, dass sich das Koppelelement bei Verlassen eines normalen Fahrniveaus in ein Hochniveau von der Deckelplatte löst.

Die vorliegende Erfindung betrifft ferner eine Luftfeder zum Dämpfen einer Relativbewegung zwischen einer ersten Masse und einer zweiten Masse, mit folgenden Merkmalen:

einem starren Fluidbehälter und einem flexiblen Fluidbehälter, die so zwischen der ersten Masse und der zweiten Masse angeordnet werden können, das der starre Fluidbehälter mit der ersten Masse und ein starrer Randbereich des flexiblen Fluidbehälters mit der zweiten Masse verbunden ist; und einem erfindungsgemäßen Dämpferventil, das in einem Übergangsbereich zwischen dem starren Fluidbehälter und dem flexiblen Fluidbehälter angeordnet ist, wobei ein Fluidstrom zwischen dem ersten Fluidbehälter und dem zweiten Fluidbehälter möglich ist, wenn sich die Ventilöffnungen und die Durchgangsöffnungen zumindest teilweise überlappen.

Der flexible Fluidbehälter kann als Luftfederbalg und der starre Fluidbehälter als Luftfedertopf ausgeführt sein. Das Dämpferventil kann in den starren Fluidbehälter eingesetzt sein. Die Fluidbehälter können gegeneinander so fluiddicht abgeschlossen sein, dass ein Fluidaustausch zwischen den Fluidbehältern ausschließlich über das Dämpfungsventil erfolgen kann.

Bevorzugte Ausführungsbeispiele der vorliegenden Erfindung werden nachfolgend Bezug nehmend auf die beiliegenden Zeichnungen näher erläutert. Es zeigen:

Fig. 1 eine Darstellung von Schaltvorgängen eines Dämpferventils;

Fig. 2 eine Darstellung einer Luftfeder;

Fig. 3 bis 7 Darstellungen eines Dämpferventils;

Fig. 8 eine Darstellung einer Luftfeder;

Fig. 9 bis 13 Darstellungen eines Dämpferventils;

Fig. 14 eine Querschnittdarstellung eines Dämpferventils;

Fig. 15 eine Querschnittdarstellung eines Dämpferventils;

Fig. 16 eine Querschnittdarstellung eines Dämpferventils;

Fig. 17 eine Darstellung eines Schaltverhaltens eines Dämpferventils;

Fig. 18 eine Darstellung von Schaltvorgängen eines Dämpferventils;

Fig. 19 bis 22 Simulationsdarstellungen von Dämpferventilen;

Fig. 23 eine Darstellung von Schaltvorgängen eines Dämpferventils; und

Fig. 24 eine Darstellung einer Luftfeder;

Fig. 25 eine schmatische Schnittdarstellung eines erfindungsgemäßen Ausführungsbeispiels eines Dämpferventils in einer ersten Stellung;

Fig. 26 eine schmatische Schnittdarstellung des Dämpferventils gem. Fig. 25 in einer zweiten Stellung;

Fig. 27 eine schmatische Schnittdarstellung des Dämpferventils gem. Fig. 25 in einer dritten Stellung;

Fig. 28    eine schmatische Schnittdarstellung eines weiteren erfindungsgemäßen Ausführungsbeispiels eines Dämpferventils;

Fig. 29    eine schematische Schnittdarstellung eines weiteren erfindungsgemäßen Ausführungsbeispiels eines Dämpferventils; und

Fig. 30    eine perspektivische Darstellung des inneren Ventilelements.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

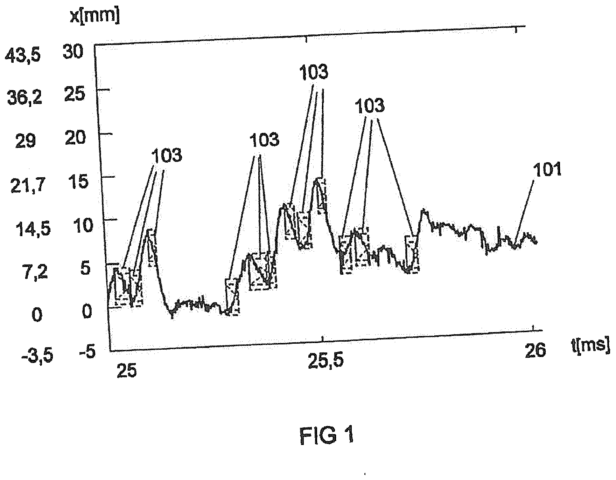

**Fig. 1** zeigt eine Darstellung von Schaltvorgängen eines weggesteuerten Dämpferventils. Das Dämpferventil kann in einer Luftfeder zwischen einem Lenker und einem Aufbau eines Fahrzeugs angeordnet sein. Gezeigt ist eine Kennlinie 101, die einen Weg x aufgetragen über die Zeit t darstellt. Bei dem Weg x kann es sich um einen Weg des Dämpfers (linkes Spalte) oder um einen Weg der Achse (rechte Spalte) handeln. Durch Kästen 103 sind sowohl Vorgänge des Ventilschaltens, während denen das Ventil geöffnet ist, als auch jeweilige Ventilwege gekennzeichnet.

Das Dämpferventil zeichnet sich durch einen großen schaltbaren Querschnitt aus. Ein Querschnitt von ca. 95 cm$^2$ entspricht einem Durchmesser von d = 11 cm. Damit ergibt sich ein schaltbarer Querschnitt, der 8-fach größer als bei einem elektrischen Ventil ist. Der Schaltpunkt 103 ist immer kurz nach dem oberen bzw. dem unteren Maximalweg. Ein kurzer Schaltweg tritt jeweils nach einem Wendepunkt auf. Bereits nach einem Weg von 3 mm am Dämpfer ist das Dämpferventil voll geöffnet. Bereits nach einem Weg von 5 mm am Dämpfer ist das Dämpferventil komplett geschlossen. Durch eine Hebelwirkung des Lenkers des Fahrzeugs ergibt sich eine Schaltweguntersetzung. So entsprechen 5 mm Weg am Ventil einem Weg von 3,45 mm an der Achse. Das Dämpferventil zeichnet sich durch ein massearmes Ventilelement aus, wodurch sich eine hohe Robustheit und dadurch eine große Anzahl möglicher Schaltzyklen ergeben. Zudem ist ein druckneutrales Ventilschalten (Ventilschieber) möglich. Es tritt auch keine Schaltverzögerung durch Massenträgheit auf, da ein bewegtes Ventilgehäuse des Dämpferventils mit der Achse verbunden sein kann, während der Ventilschieber mit dem Aufbau verbunden sein kann. Zudem ist ein frequenzunabhängiges Schaltverhalten gegeben. Somit ist auch eine Bedämpfung des Fahrzeugaufbaus möglich.

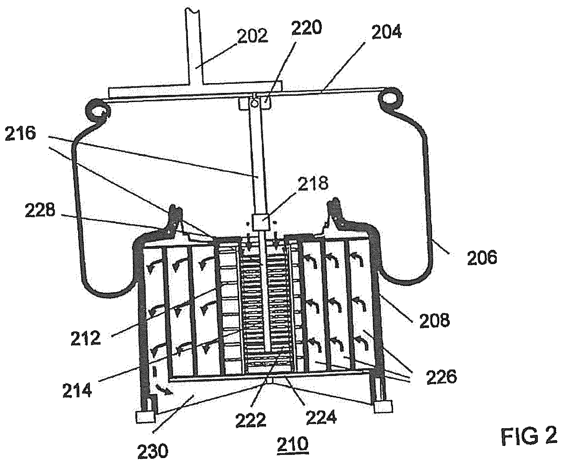

**Fig. 2** zeigt eine Darstellung einer Luftfeder. Die Luftfeder kann zwischen einem Längsträger 202 eines Fahrzeugaufbaus und einem Lenker eines Fahrzeugs angeordnet werden. Die Luftfeder weist eine Deckelplatte 204, einen Luftfederbalg 206 und einen Luftfedertopf 208 mit einem externen Volumen 210 auf. Der Luftfederbalg 206 ist an einer Oberseite des Luftfedertopfs 208 fluiddicht befestigt. Ein Luftaustausch zwischen einem Innenvolumen des Luftfederbalgs 206 und dem externen Volumen 210 des Luftfedertopfs 208 ist über ein Luftdämpferventil möglich. Das Luftdämpferventil ist innerhalb der Luftfeder angeordnet. Das Luftdämpferventil weist ein Ventilgehäuse 212 und einen Ventilkörper 214 auf. Der Ventilkörper 214 ist mittels eines Teleskopstabs 216, der eine reibende Gleitverbindung 218 aufweist über eine drehbare Befestigung 220 mit der Deckelplatte 204 verbunden. Ein sich innerhalb des Ventilkörpers 214 befindlicher Abschnitt des Teleskopstabs 216 ist über eine Achse 222, die einen Durchmesser d von 5 mm aufweisen kann, mit dem Ventilkörper 214 verbunden. Das Luftdämpferventil ist in den Luftfedertopf 208 eingelassen und sitzt auf einem Zwischenboden 224 des Luftfedertopfs 208 auf. Das Ventilgehäuse 212 ist innerhalb des Luftfedertopfs 208 von einem spiralförmigen Strömungskanal 226 zur Erhöhung der Dämpfungsleistung umringt. An dem Luftfedertopf 208 ist das Ventilgehäuse 212 über einen Ventilmontagering 228 befestigt. Der Luftfedertopf 208 weist eine abstützende sternförmige Verrippung 230 auf. Die Verrippung ist zur besseren Stabilität des externen Speichers gedacht.

Wenn die Luftfeder einfedert, das heißt das ein Abstand zwischen der Deckelplatte 204 und dem Luftfedertopf 208 verringert wird, und das Luftdämpferventil geöffnet ist, kann ein Luftstrom, wie durch die Pfeile angedeutet, aus dem Luftfederbalg 206 in den Ventilkörper 214 einströmen und aus dem Ventilkörper 214 durch Öffnungen des Ventilgehäuses 212 hindurch in den Strömungskanal 224 strömen. Über den Strömungskanal 226 erreicht der Luftstrom das externe Volumen 210. Aufgrund der Spiralform des Strömungskanals 226 wird der Luftstrom mehrmals im Kreis geführt, bevor er in das externe Volumen 210 mündet. Wenn die Luftfeder ausfedert, das heißt das der Abstand zwischen der Deckelplatte 204 und dem Luftfedertopf 208 vergrößert wird, und das Luftdämpferventil geöffnet ist, kann der Luftstrom in umgekehrter Richtung fließen und für einen entsprechenden Druckausgleich sorgen. Wenn das Luftdämpferventil geschlossen ist, ist kein Luftaustausch und somit kein Druckausgleich zwischen dem Luftfederbalg 206 und dem Luftfedertopf 208 möglich.

Gemäß einem Ausführungsbeispiel weist die Luftfeder als benötigte Teile den Luftfedertopf 208 inklusiv des spiralförmigen Strömungskanals 226, das Ventilgehäuse 212, den Ventilkörper 214, den Ventilmontagering 228, zwei über die reibende Gleitfläche 218 verbundene, beidseitig drehbar gelagerte und an Deckelplatte 204 des Luftdämpfers sowie dem Ventilkörper 214 befestigte Teile eines Teleskopstabs 216, das externes Volumen 210 mit einer beispielsweise einen Meter langen Schlauchverbindung zu einem externen Speicher, die alternativ mittels des spiralförmigen Strömungskanals 226 realisiert werden kann, und den Luftfederbalg 206 mit der Deckelplatte 204 auf. Der Teleskopstab 216 ist über die reibende Gleitfläche 218 in seiner Länge veränderbar. Ferner wird ein Adapter zur Verbindung von Luftfedertopf mit externem Volumen benötigt.

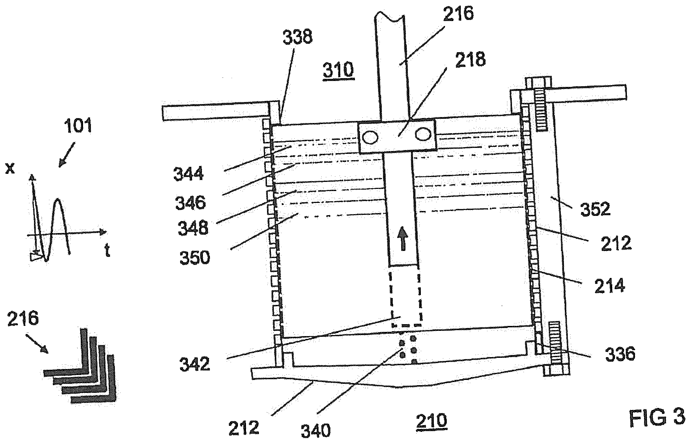

**Fig. 3** zeigt eine Seitenansicht im Schnitt durch ein weggesteuertes Luftdämpferventil. Das Ventil kann bei der in 2 gezeigten Luftfeder eingesetzt werden. Durch das Ventil kann ein Fluidstrom zwischen einem Innenraum 210 eines Zusatzvolumens und einem weiteren Innenraum 310, beispielsweise der Luftfeder, gesteuert werden. Das Ventil ist in der Ventilstellung Anschlag oben gezeigt.

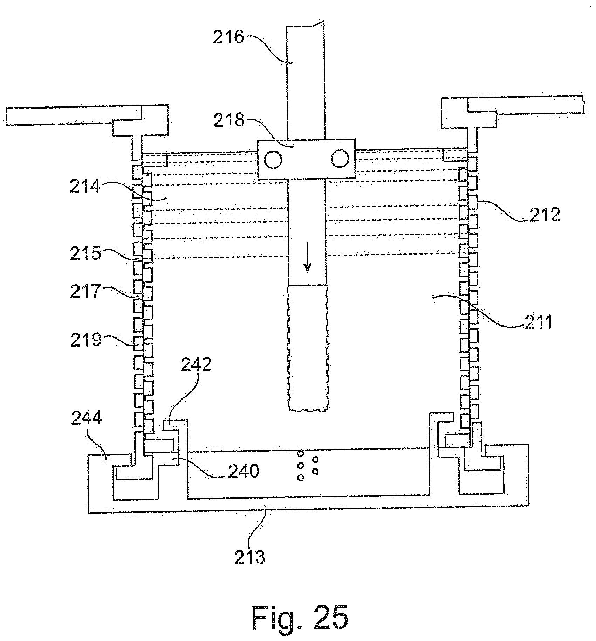

Das Dämpferventil weist ein Ventilgehäuse 212, einen Ventilkörper 214, ein Befestigungselement in Form einer reibenden Verbindung 218 und ein Koppelelement in Form eines teleskopartigen Metallstabs 216 auf. Der Ventilkörper 214 kann als ein zylindrischer Ventilkörper, beispielsweise als ein V2A-Rohr ausgebildet sein. Das Ventilgehäuse 212 weist eine umlaufende Seitenwand und einen Ventilgehäuseboden (siehe hierzu beispielsweise Fig. 25 bis 27) auf. Der Ventilkörper 214 ist gegenüber dem Ventilgehäuse 212 in Richtung einer Längserstreckungsrichtung des Dämpferventils beweglich angeordnet. Ein Außendurchmesser des Ventilkörpers 214 ist an einen Innendurchmesser des Ventilgehäuses 212 so angepasst, dass sich die Außenwand des Ventilkörpers 214 und die Innenwand des Ventilgehäuses 212 berühren oder minimal beabstandet voneinander sind, so dass zwischen sich gegenüberliegenden Flächen des Ventilkörpers 214 und des Ventilgehäuses kein oder nur ein vernachlässigbar geringer Fluidstrom möglich ist. Der Ventilgehäuseboden weist einen unteren Anschlag 336 für den Ventilkörper 214 auf. Der Anschlag 336 kann durch eine entlang der Innenseite der Seitenwand verlaufende Erhöhung ausgebildet sein. Der Anschlag 336 begrenzt eine Bewegung des Ventilkörpers 214 in Richtung des Ventilgehäusebodens. An einer dem Anschlag 336 gegenüberliegenden Seite des Ventilkörpers 214 ist ein oberer Anschlag 338 angeordnet. Der weitere Anschlag 338 ist mit dem Ventilgehäuse 212 verbunden und kann entlang der Innenseite der Seitenwand des Ventilgehäuses 212 ausgebildet sein. Der Anschlag 338 begrenzt eine Bewegung des Ventilkörpers 214 in entgegengesetzter Richtung, also weg von dem Ventilgehäuseboden. Zwischen dem Ventilgehäuseboden des Ventilgehäuses 212 und dem Ventilkörper 214 ist eine Druckfeder 340 zur Eigengewichtskompensation angeordnet. Durch die Druckfeder 340 kann gewährleistet werden, dass der Dämpfer in beide Schaltrichtungen das gleiche Schaltverhalten aufweist. Für den Stab 216 ist eine maximale Eintauchtiefe 342 in ein Inneres des Ventilkörpers 214 gezeigt.

Die Seitenwand 212 des Ventilgehäuses weist eine Mehrzahl von Ventilöffnungen auf.

Die Ventilöffnungen sind über eine Höhe der Seitenwand 212 verteilt angeordnet. Gemäß diesem Ausführungsbeispiel sind die Ventilöffnungen im gleichmäßigen Abstand über die Höhe der Seitenwand 212 angeordnet. In entsprechender Weise weist eine Seitenwand des Ventilkörpers 214 eine Mehrzahl von Durchgangsöffnungen auf. Die Durchgangsöffnungen sind über eine Höhe der Seitenwand des Ventilkörpers 214 verteilt angeordnet. Gemäß diesem Ausführungsbeispiel sind die Durchgangsöffnungen im gleichmäßigen Abstand zueinander angeordnet. Gezeigt ist in Fig. 3 eine Schlitzbreite 344 der Ventilöffnungen, ein Verstellweg 346, eine Stegbreite 348 zwischen zwei benachbarten Durchgangsöffnungen und einen Stegabstand 350 . Die Schlitzbreite 344 kann 2 mm, der Verstellweg 3 mm, die Stegbreite 348 4 mm und der Stegabstand 6 mm betragen.

Die reibende Verbindung 218 ist mit dem Ventilkörper 214 verbunden. Eine Befestigung zwischen der Verbindung 218 und dem Ventilkörper 214 kann starr ausgeführt oder zumindest in Längsrichtung des Stabs 216 kein Spiel aufweisen. Die reibende Verbindung 218 weist eine Reibfläche oder Gleitfläche auf, die mit dem Stab 216 in Kontakt ist. Die reibende Verbindung 218 kann eine Durchgangsöffnung aufweisen, durch die der Stab 216 durchgeführt ist. Eine Bewegung des Stabs 216 wird aufgrund der Haftreibung oder Gleitreibung zwischen dem Stab 216 und der reibenden Verbindung 218 auf den Ventilkörper 214 übertragen.

Der Stab 216 weist eine Mehrzahl von Stabelementen auf, die in Längserstreckungsrichtung des Stabs 216 gegeneinander verschiebbar angeordnet sind. Die Längserstreckungsrichtung des Stabs kann einer Bewegungsrichtung des Ventilkörpers gegenüber dem Ventilgehäuse entsprechen. Die Stabelemente und die Verbindung 218 sind so ausgelegt, dass bei einer Verschiebung der Stabelemente gegeneinander eine größere Reibkraft zu überwinden ist als bei einer Verschiebung des Stabs 216 gegenüber der Verbindung 218. Eine Reibkraft, die bei einer Bewegung des Ventilkörpers 214 relativ zum Ventilgehäuse 212 zu überwinden ist, ist wiederum geringer als die bei der Verschiebung des Stabs 216 gegenüber der Verbindung 218 zu überwindende Reibkraft. Somit besteht die größte Reibung zwischen den Teleskopelementen, eine mittlere Reibung an der reibenden Verbindung 218 und die kleinste Reibung zwischen der Außenwand des Ventilkörpers 214 und der gegenüberliegenden Innenwand des Ventilgehäuses 212. Das Ventilgehäuse 212 kann an über einen senkrechten Außengehäusesteg 352 in der Luftfeder befestigt sein. Wird das Gehäuse 212 relativ zu einem dem Ventilkörper 214 abgewandten Ende des Stabs 216 bewegt, so führt dies zunächst dazu, dass sich das Ventilgehäuse 212 relativ zu dem Ventilkörper 214 bewegt. Sobald eine weitere Relativbewegung zwischen dem Ventilköper 214 und dem Ventilgehäuse 212 verhindert wird, weil der Ventilkörper 214 an einem der Anschläge 336, 338 anstößt, bewegt sich der Stab 216 entlang der reibenden Verbindung 218. Der Stab 216 bewegt sich also relativ zu dem Ventilkörper 214, bis auch diese Bewegung durch einen weiteren Anschlag begrenzt wird. Anschließend bewegen sich die Stabelemente des Stabs 216 zueinander, wodurch sich die Länge des Stabs 216 in Bezug auf die Längserstreckungsrichtung des Dämpferventils verändert.

Umgekehrt überträgt sich eine Bewegung des von dem Ventilkörper 214 abgewandten Endes des Stabs 216 über die Stabelemente des Stabs 216 und die reibende Verbindung 218 auf den Ventilkörper 214 und führt zu einer Bewegung des Ventilkörpers 214 relativ zu dem Ventilgehäuse 212, bis diese Bewegung durch einen der Anschläge 336, 338 begrenzt wird. Anschließend erfolgt eine Bewegung des Stabs 216 entlang der reibenden Verbindung 218 und schließlich eine Längenveränderung des Stabs 216 selbst.

Ein maximaler Einfederweg oder Ausfederweg des Luftdämpferventils ergibt sich somit aus einem maximalen Bewegungsweg des Ventilkörpers 214 gegenüber dem Ventilgehäuse 212, einem maximalen Bewegungsweg des Stabs 216 entlang der reibenden Verbindung 218 und einer maximalen Längenveränderung des Stabs 216. In Fig. 3 ist zusätzlich eine Draufsicht auf den teleskopartigen Stab 216 in Form eines Winkelprofils gezeigt. Der Stab 216 weist dabei im dargestellten Beispiel vier Winkelprofile auf, die gegeneinander verschoben werden können. Anstelle eines Winkelprofils kann der Teleskopstab auch aus Rundrohren verschiedener Durchmesser oder einem beliebigen anderen Profil bestehen. Die Reibfläche der Verbindung 218 kann an die Form des Winkelprofils angepasst sein.

Anhand eines Ausschnitts der Kennlinie 101 des Dämpferventils, die einen Einfederweg x des Ventils über die Zeit t beschreibt, ist angedeutet, dass 3 das Dämpferventil in einem Zustand kurz vor einem unteren Wendepunkt zeigt, bei dem das Dämpferventil seine größte Längenausdehnung aufweist. Der Ventilkörper 212 liegt an dem hier oben dargestellten Anschlag 338 an. Die Ventilöffnungen und die Durchgangsöffnungen sind zueinander versetzt, so dass die Ventilöffnungen durch gegenüberliegende Bereiche des Ventilkörpers und die Durchgangsöffnungen durch gegenüberliegende Bereiche des Ventilgehäuses verschlossen sind. Somit ist das Dämpferventil geschlossen.

Aufgrund der Teleskopschiene 216 weist der Dämpfer einen sehr großen Bewegungsbereich und eine hohe Hubhöhe auf. Der Dämpfer ist dabei für ca. 100 Millionen Betätigungen ausgelegt. Um dies sicherzustellen können reibfeste Führungsbänder zwischen dem Ventilköper 214 und dem Ventilgehäuse 212 angeordnet werden. Der Ventilkörper 214 kann als ein Rohr, beispielsweise aus Edelstahl, ausgeführt sein. Das Rohr kann mit Schlitzen versehen sein, die die Durchgangsöffnungen ausbilden. Das Ventilgehäuse 212 und insbesondere die Seitenwand des Ventilgehäuses 212 kann aus Metall, beispielsweise Stahl, oder Kunststoff sein.

Das Ventilgehäuse 214 kann bei einer Höhe von 10 cm und einen Durchmesser von 11 cm einen schaltbaren Querschnitt von ca. 100 cm2 aufweisen, welches einem kreisförmigen Lochdurchmesser von 113 mm entspricht.

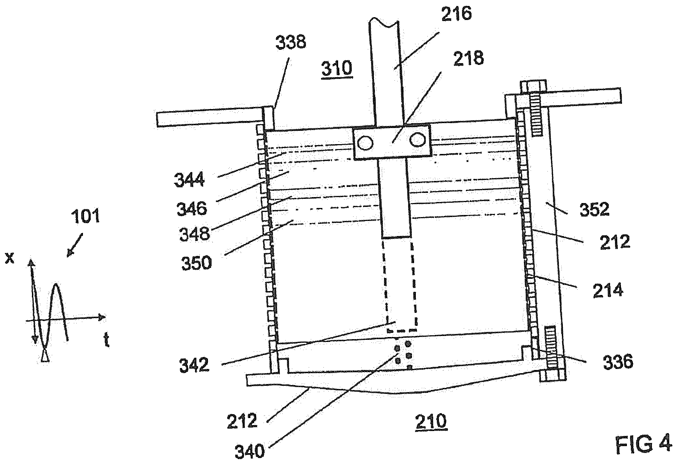

Fig. 4 zeigt das in Fig. 3 gezeigte weggesteuerte Luftdämpferventil in einem Zustand an dem unteren Wendepunkt des Einfederwegs x. Der Ventilkörper 212 liegt an dem Anschlag 338 an. Die Ventilöffnungen und die Durchgangsöffnungen sind zueinander versetzt, so dass das Dämpferventil geschlossen ist. Ein sich an der Verbindung 218 vorbei in den Ventilkörper 214 hinein erstreckender Abschnitt des Stabs 216 weist eine geringste Länge auf. Die Länge des Stabs 216 ist maximal. Das Ventil ist in der Ventilstellung Anschlag oben gezeigt.

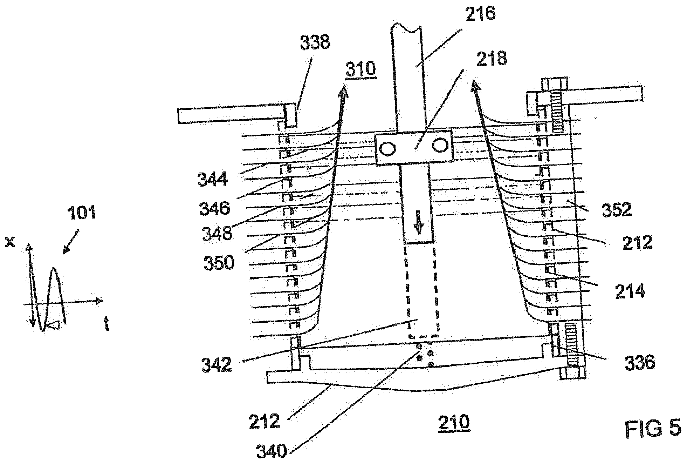

Fig. 5 zeigt das in Fig. 4 gezeigte weggesteuerte Luftdämpferventil in einem Zustand zeitlich nach dem unteren Wendepunkt des Einfederwegs x. Der Ventilkörper 212 bewegt sich in Richtung des Anschlags 336 und befindet sich gerade in einer Mittelstellung zwischen den Anschlägen 336, 338. Die Ventilöffnungen und die Durchgangsöffnungen sind zueinander ausgerichtet, so dass das Dämpferventil geöffnet ist. Die Länge des sich an der Verbindung 218 vorbei in den Ventilkörper 214 hinein erstreckende Abschnitts des Stabs 216, sowie die Länge des Stabs 216 hat sich gegenüber dem in Fig. 4 gezeigten Zustand nicht geändert. Durch die Ventilöffnungen und die Durchgangsöffnungen ist ein Fluidstrom möglich, der durch die Pfeile angedeutet ist. Der Fluidstrom ermöglicht einen Druckausgleich zwischen dem Innenraum des Zusatzvolumens 210 und dem Innenraum 310 der Luftfeder. Das Ventil ist in der Ventilstellung Mitte - geöffnet gezeigt.

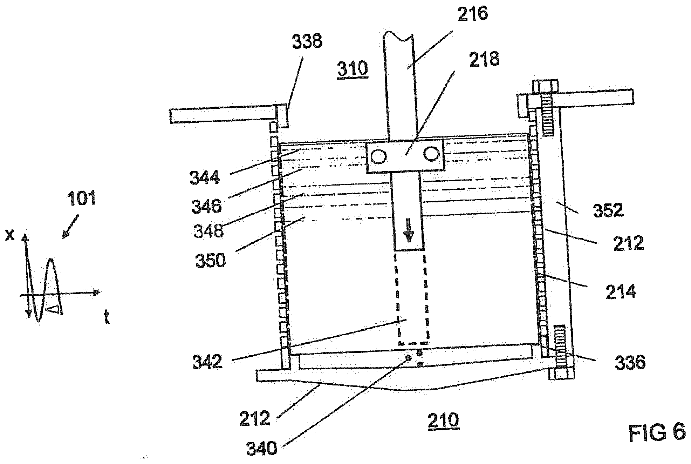

Fig. 6 zeigt das in Fig. 5 gezeigte weggesteuerte Luftdämpferventil in einem Zustand zeitlich noch etwas später nach dem unteren Wendepunkt des Einfederwegs x. Der Ventilkörper 214 hat den Anschlags 336 erreicht und kann keine weitere Relativbewegung in Bezug zu dem Ventilgehäuse 212 ausführen. Die Ventilöffnungen und die Durchgangsöffnungen sind zueinander versetzt, so dass das Dämpferventil geschlossen ist. Das Ventil ist in der Ventilstellung Anschlag unten gezeigt.

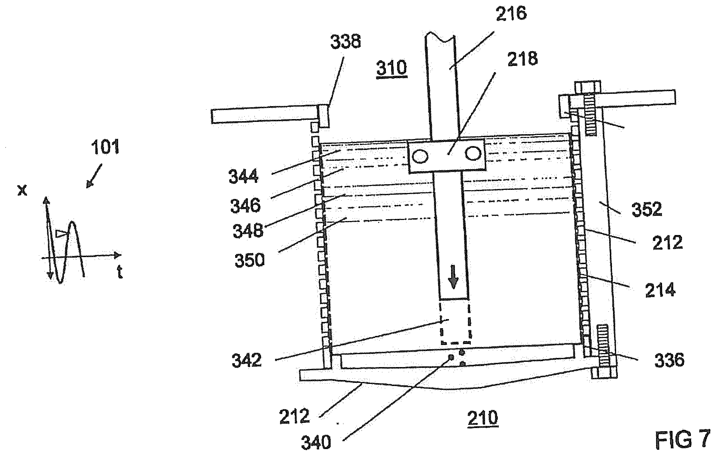

Fig. 7 zeigt das in Fig. 6 gezeigte weggesteuerte Luftdämpferventil in einem Zustand kurz vor einem oberen Wendepunkt, bei dem das Dämpferventil seine geringste Längenausdehnung aufweist. Der Ventilkörper 212 liegt an dem hier unten dargestellten Anschlag 336 an. Das Dämpferventil ist geschlossen. Der Stab 216 wird entlang der Verbindung 218 in den Ventilkörper 214 hineingeschoben, bis er die maximale Eintauchtiefe 342 erreicht hat. Dabei wird der Stab 216 zusammengeschoben, bis er seine geringste Länge erreicht hat. Das Ventil ist in der Ventilstellung Anschlag unten gezeigt.

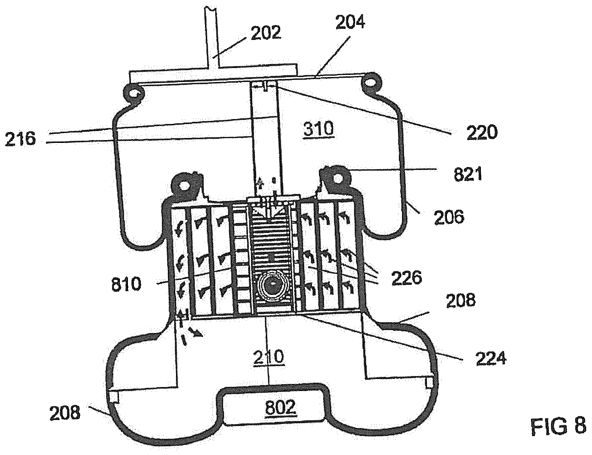

Fig. 8 zeigt eine Darstellung einer Luftfeder. Die Luftfeder kann zwischen einem Längsträger 202 eines Fahrzeugaufbaus und einem mit einer Achse verbundenen Lenker 802 eines Fahrzeugs angeordnet werden. Die Luftfeder weist eine Deckelplatte 204, die eine Aufbaubewegung des Fahrzeugs auf die Luftfeder überträgt, einen Luftfederbalg 206 und einen Luftfedertopf 208 auf. Der Luftfedertopf 208 weist ein Unterteil und ein Oberteil auf. Das Unterteil liegt auf dem Lenker 802 auf, so dass eine Achsbewegung über den Lenker 802 auf den Luftfedertopf 208 übertragen werden kann. Das Oberteil ist mit dem Luftfederbalg 206 verbunden. Innerhalb der Luftfeder ist ein weggesteuertes Luftdämpferventil 810 angeordnet, das einen Luftaustausch zwischen einem Innenvolumen 310 des Luftfederbalgs 206 und einem externen Volumen 210 des Luftfedertopfs 208 steuert. In dem Innenvolumen 310 kann sich ein die Luftfeder charakterisierendes Druckniveau bilden.

Das Luftdämpferventil 810 ist in den Luftfedertopf 208 eingelassen und sitzt auf einem Zwischenboden 224 des Luftfedertopfs 208 auf. Das Ventilgehäuse 212 ist von einem spiralförmigen Strömungskanal 226 zur Erhöhung der Dämpfungsleistung umringt. Wenn die Luftfeder einfedert, das heißt das ein Abstand zwischen der Deckelplatte 204 und dem Luftfedertopf 208 verringert wird, und das Luftdämpferventil geöffnet ist, kann ein Luftstrom, wie durch die Pfeile angedeutet, aus dem Luftfederbalg 206 in das Luftdämpferventil 810 einströmen und durch das Luftdämpferventil 810 hindurch in den Strömungskanal 226 strömen. Über den Strömungskanal 226 erreicht der Luftstrom in das externe Volumen 210. Aufgrund der Spiralform des Strömungskanals 224 wird der Luftstrom mehrmals im Kreis geführt, bevor er in das externe Volumen 210 mündet. Wenn die Luftfeder ausfedert, das heißt dass der Abstand zwischen der Deckelplatte 204 und dem Luftfedertopf 208 vergrößert wird, und das Luftdämpferventil geöffnet ist, kann der Luftstrom in umgekehrter Richtung fließen und für einen entsprechenden Druckausgleich sorgen. Wenn das Luftdämpferventil geschlossen ist, ist kein Luftaustausch und somit Druckausgleich zwischen dem Luftfederbalg 206 und dem Luftfedertopf 208 möglich. Bei einer Federbewegung der Luftfeder bleibt der Luftfedertopf 208 formstabil. Eine durch die Federbewegung hervorgerufene Längenänderung wird über den Luftfederbalg 206 realisiert. Der Luftfederbalg 206 weist dazu eine flexible Hülle auf, die eine an den Luftfedertopf 208 anliegende längenveränderliche Falte ausbildet. Um ein direktes Aufschlagen der Deckelplatte 204 auf den Luftfedertopf 208 zu vermeiden, ist auf einer der Deckelplatte 204 zugewandten Seite des Luftfedertopfs 208 ein Anschlagpuffer 821 angeordnet.

Ein Ventilkörper des Luftdämpferventils 810 ist über zwei Zugseile 216 mittels einer Seilbefestigung 220 mit der Deckelplatte 204 verbunden.

In Fig. 8 ist eine Einbaulage des Ventils und die Verbindung des Ventilkörpers mit dem Fahrzugaufbau gezeigt. Dabei ist ein Ventilinnenraum mit Luft im Luftfederbalg 206 verbunden. Aus dem Ventilgehäuse austretende Luft wird in einem spiralförmigen Strömungskanal 226 geleitet und gelangt an dessen Ausgang in das externe Speichervolumen 210. Eine Zugkraft der zwei Zugseile 216 ist wegunabhängig konstant. Dazu kompensiert eine in dem Luftdämpferventil 810 angeordnete Spiraltrommel eine Kraftzunahme infolge der Federrate mittels Adaption des Wirkradius der sich aufwickelnden Zugseile. Der spiralförmige Strömungskanal 226 dient zur Erhöhung der Dämpfleistung. Der spiralförmige Strömungskanal 226 kann eine Kanallänge von ca. 1,2 m aufweisen. Durch die Masseträgheit der in dem Strömungskanal 224 strömenden Luft kann über den eigentlichen Druckausgleich hinaus weiter Luft aus dem Volumen 210 oder dem Volumen 310 herausgezogen werden.

Indem der Längsträger 202 mit dem Aufbau des Fahrzeugs verbunden ist, ist er fahrzeugseitig in Ruhe. Der Luftfedertopf 208 ist nicht direkt mit der Achse sondern mit dem Lenker 802 verbunden. Die zu dämpfende Achse befindet sich näher am Drehpunkt des Lenkers als die Luftfeder. Die Bewegungen der Achse werden infolge dessen durch den Lenker 802 verstärkt auf den Luftfedertopf 208 übertragen.

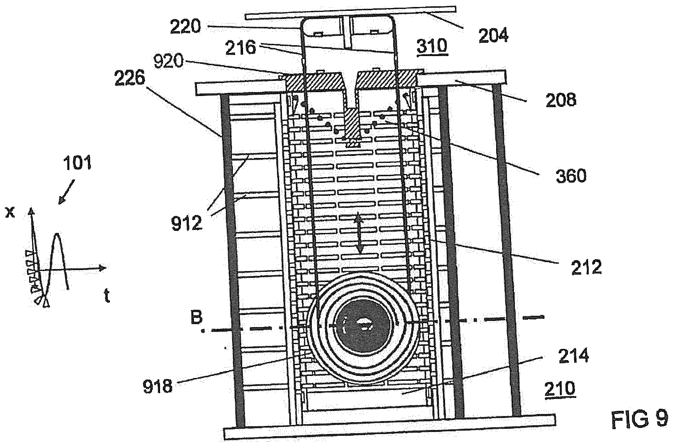

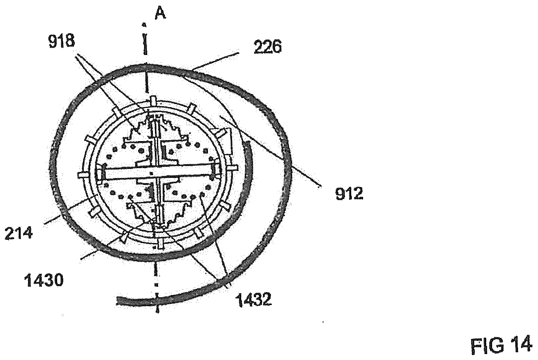

Fig. 9 zeigt eine Seitenansicht entlang einer in Figur 14 gezeigten Schnittlinie A durch ein weggesteuertes Luftdämpferventil. Das Ventil kann bei der in Fig. 8 gezeigten Luftfeder eingesetzt werden. Durch das Ventil kann ein Fluidstrom zwischen einem Innenraum 210 eines Zusatzvolumens und einem Innenraum 310, beispielsweise des Luftfederbalgs, gesteuert werden.

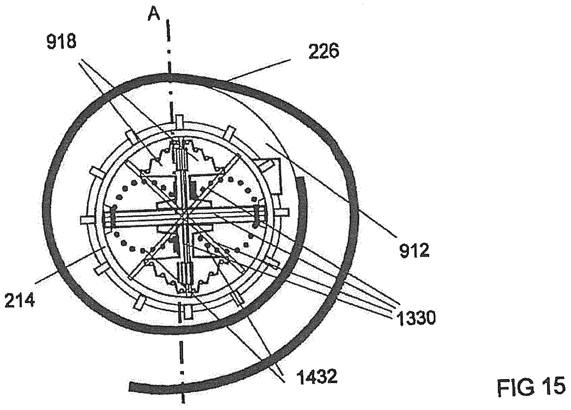

Das Dämpferventil weist ein Ventilgehäuse 212, einen Ventilschieber oder Ventilkörper 214, ein Befestigungselement in Form von zwei spiralförmigen Trommeln 918, die eine reibende Verbindung ausbilden, und ein Koppelement in Form von zwei Zugseilen 216 auf. Die Zugseile 216 sind mittels einer Befestigung 220 an einer Deckelplatte 204 befestigt. Über die Deckelplatte 204 kann eine Aufbaubewegung eines Fahrzeugs auf das Luftdämpferventil übertragen werden. Die in den Ventilkörper 212 hineinreichenden Enden der Zugseile 216 sind jeweils auf einer der Trommeln 918 aufgewickelt. Die beiden gegenphasig sich auf- beziehungsweise abwickelnden Zugseile 216 bewirken eine drehbewegungsneutrale und damit reibungsarme senkrechte Bewegung des Ventilkörpers 214 im Ventilgehäuse 212. Anstelle von zwei Zugseilen 216 kann auch ein Seil eingesetzt werden, welches beispielsweise mittig von der Befestigung 220 gehalten wird und zwei freie Enden aufweist, die als die zwei Zugseile 216 fungieren. Der Ventilkörper 214 kann als ein zylindrischer Ventilkörper, beispielsweise als Kunststoffspritzguss ausgebildet sein. Auch das Ventilgehäuse kann aus Kunststoffspritzguss ausgebildet sein und eine kreisförmige Verrippung 912 zur Zylinderformstabilität besitzen. Um selbst hohen Dämpfleistungen und damit hohen Temperaturbelastungen zu widerstehen, können Gehäuse und Ventilelement anstelle Kunstoff auch aus Metalldruckguss oder Blech bzw. Tiefziehblech bestehen. Ebenfalls kann der Ventilkörper 214 zur besseren Formstabilität mit einer sternförmigen Verrippung 1330 ausgebildet sein, wie sie in Fig. 15 gezeigt ist. Ferner sind in Fig. 9 Teile eines spiralförmigen Resonanzkörpers 226 gezeigt, innerhalb dessen das Ventilgehäuse 212 angeordnet ist. Das Ventilgehäuse 212 grenzt an eine Oberkante eines Luftfedertopfs 208 an und ist mit diesem starr verbunden. Somit kann eine Achsbewegung des Fahrzeugs über den Luftfedertopf 208 auf das Ventilgehäuse 212 übertragen werden. Das Ventilgehäuse 212 weist eine umlaufende Seitenwand und einen Ventilgehäuseboden auf. Der Ventilgehäuseboden weist einen unteren Anschlag für den Ventilkörper 214 auf. Der Anschlag kann durch eine entlang der Innenseite der Seitenwand verlaufende Erhöhung des Ventilgehäusebodens oder durch den Ventilgehäuseboden selbst ausgebildet sein. Der Anschlag begrenzt eine Bewegung des Ventilkörpers 214 in Richtung des Ventilgehäusebodens. An einer dem Ventilgehäuseboden gegenüberliegenden Seite des Ventilkörpers 214 ist ein oberer Anschlag angeordnet. Der obere Anschlag ist mit dem Ventilgehäuse 212 verbunden und kann entlang der Innenseite der Seitenwand des Ventilgehäuses 212 ausgebildet sein. Auch kann der obere Anschlag als eine Abdeckung 920 ausgebildet sein, die eine Aussparung in einer Oberkante des Luftfedertopfs 208 teilweise abdeckt. Durch die Aussparung können die Zugseile 216 geführt sowie eine Feder 360 fixiert sein und es kann ein Luftaustausch zwischen dem Innenraum 310 und einem Innenraum des Ventilkörpers 214 stattfinden. Eine Druckfeder F2 360 kann vorgesehen sein, um eine Vorspannung der Zugseile 216, die auf den Ventilkörper 214 wirkt, zu kompensieren. Die Druckfeder 360 kann an einem der Befestigung 220 zugewandten Ende des Ventilkörpers 214 angeordnet sein. Gemäß diesem Ausführungsbeispiel weist die Abdeckung 920 einen sich in das Innere des Ventilkörpers 214 hinein erstreckenden stabförmigen Fortsatz auf. Die Druckfeder 360 ist pyramidenförmig ausgebildet, und mit ihrem spitzen Ende an dem stabförmigen Fortsatz und mit ihrem breiten Ende an dem Ventilkörper 214 befestigt. Der stabförmige Fortsatz ist mittig an der Abdeckung 920 angeordnet.

Die Befestigung 220 kann auf einen von der Deckelplatte 204 in Richtung des Ventilkörpers 214 abstehenden Stab aufgeschoben oder auf eine entsprechende Schraube aufgeschraubt sein. Die Befestigung kann als ein Körper ausgebildet sein, der ein arretierendes Teil aufweist, mittels dem die Befestigung an der Deckelplatte 204 durch einen einmalig durchzuführenden Einrastvorgang fixiert werden kann. Eine entsprechend Arretierung kann erfolgen, wenn die Deckelplatte 204 erstmalig soweit in Richtung der Oberkante des Luftfedertopf 208 gedrückt wird, dass die Befestigung 220 gegen die Abdeckung 920 stößt und von der Abdeckung 920 gegen die Deckelplatte 204 gedrückt wird, wodurch das arretierende Teil einrasten kann. Die Abdeckung 920 kann eine Aussparung aufweisen, in die der Stab oder die Schraube, mittels der die Befestigung 220 gehalten wird, bei einer Annäherung der Deckelplatte 204 an die Abdeckung 920 eingeführt werden kann.

Die Seitenwand 212 des Ventilgehäuses weist eine Mehrzahl von Ventilöffnungen auf. Die Ventilöffnungen sind über eine Höhe der Seitenwand 212 verteilt angeordnet. Gemäß diesem Ausführungsbeispiel sind die Ventilöffnungen im gleichmäßigen Abstand über die Höhe der Seitenwand 212 angeordnet. In entsprechender Weise weist eine Seitenwand des Ventilkörpers 214 eine Mehrzahl von Durchgangsöffnungen auf. Die Durchgangsöffnungen sind über eine Höhe der Seitenwand des Ventilkörpers 214 verteilt angeordnet. Gemäß diesem Ausführungsbeispiel sind die Durchgangsöffnungen im gleichmäßigen Abstand zueinander angeordnet oder als durchgehend nutförmige Öffnung ausgeführt. Gezeigt sind in Fig. 9 ein Teil der Durchgangsöffnungen, die rechteckförmig oder als Schlitze ausgeführt sind. Die Durchgangsöffnungen sind in mehreren Spalten und Reihen umlaufend um die Seitenwand des Ventilkörpers 214 angeordnet. Dabei sind die Durchgangsöffnungen so ausgerichtet, dass sie jeweils mit ihrer Längserstreckungsrichtung parallel zum Umfang des Ventilkörpers ausgerichtet sind.

Der Ventilkörper 214 kann sich relativ zu dem Ventilgehäuse 212 bewegen. Entgegengesetzte Bewegungsrichtungen, entlang der Längsachse des Ventilkörpers 214, sind in Fig. 9 durch einen Doppelpfeil angedeutet. Es können Führungsbänder eingesetzt werden, die an dem Ventilkörper 214 oder dem Ventilgehäuse 212 angeordnet sind und eine eng tolerierte Relativbewegung zwischen dem Ventilkörper 214 und dem Ventilgehäuse 212 ermöglichen.

Die zwei Trommeln 918 sind im Inneren des Ventilkörpers 214 angeordnet und mit diesem verbunden. Dazu ist eine Achse radial durch den Ventilkörper 214 geführt und an der Seitenwand des Ventilkörpers befestigt. Somit steht die Drehachse der Trommeln 918 orthogonal zu einer Längsachse und einer Bewegungsrichtung des Ventilkörpers 214. Die zwei Trommeln 918 sind nebeneinander auf der Achse drehbar gelagert. Jeder der zwei Trommeln 918 ist eine Triebfeder 1432 zugeordnet, wie sie in Fig. 14 gezeigt ist. Die Triebfedern 1432 können als Tonnenfedern realisiert sein. Die Triebfedern 1432 werden bei einer Drehung der jeweiligen Trommel 918 gespannt und können anschließend eine Rückstellkraft auf die jeweilige Trommel 918 ausüben, um die Trommel 918 wieder zurückzudrehen. Die zwei Trommeln 918 grenzen aneinander und berühren sich stirnförmig an zumindest einer Reibfläche. Führen die zwei Trommeln 918 gegenläufige Drehbewegungen aus, so wirkt eine an der Reibfläche auftretende Reibung diesen Drehbewegungen entgegen. Um die Reibungskraft an der Reibfläche zu erhöhen, dienen die beiden Triebfedern 1432 gleichzeitig auch als Druckfedern um die zwei Trommeln 918 gegeneinander zu pressen. Da die beiden Triebfedern 1432 sich jeweils gegen die Achse 222 abstützen, wird eine kraftneutrale Anbindung der Achse 222 an den Ventilkörper 214 ermöglicht. Die Zugseile 216 verlaufen von der Befestigung 220 in den Ventilkörper 214 hinein und sind mit ihren Enden jeweils mit einer der zwei Trommeln 918 verbunden. Dabei sind die Enden der Zugseile 216 gegenläufig auf die Trommeln 918 aufgewickelt. Die Reibung an der Reibfläche ist größer als eine Reibung zwischen dem Ventilkörper 214 und dem Ventilgehäuse 212.

Wird ein Abstand zwischen der Befestigung 220 und dem Gehäuse 212 vergrößert, so führt dies zunächst dazu, dass sich das Ventilgehäuse 212 relativ zu dem Ventilkörper 214 bewegt. Sobald eine weitere Relativbewegung zwischen dem Ventilköper 214 und dem Ventilgehäuse 212 verhindert wird, weil der Ventilkörper 214 an einem der Anschläge 336, 338, wie sie in Fig. 3 gezeigt sind, anstößt, werden die Enden der Zugseile 216 von den Trommeln 918 abgewickelt. Dadurch werden die Trommeln 918 in gegenläufige Drehrichtungen bewegt und reiben aneinander.

Wird ein Abstand zwischen der Befestigung 220 und dem Gehäuse 212 verringert, so führt dies zunächst dazu, dass sich das Ventilgehäuse 212 relativ zu dem Ventilkörper 214 bewegt. Sobald eine weitere Relativbewegung zwischen dem Ventilköper 214 und dem Ventilgehäuse 212 verhindert wird, weil der Ventilkörper 214 an einem der Anschläge anstößt, werden die Enden der Zugseile 216 von den Trommeln 918 aufgewickelt. Dabei werden die Trommeln 918 aufgrund der Triebfedern, die beim vorangegangenen Abwickeln der Zugseile 216 gespannt wurden, angetrieben.

Ein maximaler Ausfederweg des Luftdämpferventils ergibt sich somit aus einem maximalen Bewegungsweg des Ventilkörpers 214 gegenüber dem Ventilgehäuse 212 und einer maximalen abrollbaren Länge der Zugseile 216.

Anstelle der Zugseile 216 können auch Riemen, beispielsweise Kunststoffriemen eingesetzt werden. Als Riemen kann ein Zahnriemen oder ein Keilriemen eingesetzt werden. Der Zahnriemen weist den Vorteil einer rutschfesten Verbindung zu der Trommel 918 auf. Es kann beispielsweise ein Zahnriemen mit einer Breite von 3 mm eingesetzt werden.

Anhand eines Ausschnitts der Kennlinie 101 des Dämpferventils, die einen Einfederweg x des Ventils über die Zeit t beschreibt, ist gezeigt, dass Fig. 9 das Dämpferventil in einem Zustand vor einem unteren Wendepunkt zeigt, bei dem der Luftfederbalg 206 seine größte Längenausdehnung aufweist. Der Ventilkörper 212 liegt an der Abdeckung 920 an. Die Ventilöffnungen und die Durchgangsöffnungen sind zueinander versetzt, so dass die Ventilöffnungen durch gegenüberliegende Bereiche des Ventilkörpers und die Durchgangsöffnungen durch gegenüberliegende Bereiche des Ventilgehäuses verschlossen sind. Somit ist das Dämpferventil geschlossen. Indem die Spalten der Durchgangsöffnungen und Ventilöffnungen klein ausgeführt sind, kann das Ventil nahe am Totpunkt schalten.

Treten nur kleine Auslenkungen des Einfederweges auf, so bleibt das Ventil geschlossen und es erfolgt, wie üblicherweise gewünscht, keine Dämpfung.

Eine Masseträgheit spielt keine Rolle, da der Ventilkörper 214 samt seinen Trommeln 918 mit dem bewegungsarmen Längsträger 202 verbunden ist.

Das Ventilgehäuse 214 kann beispielsweise eine Höhe von 15 cm und einen Durchmesser von 6 cm aufweisen.

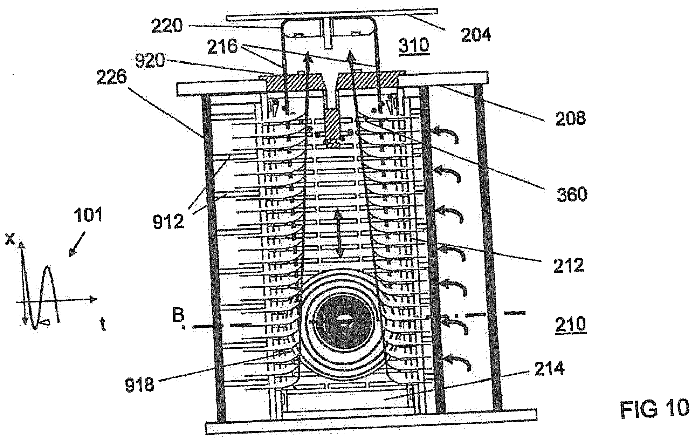

Fig. 10 zeigt das in Fig. 9 gezeigte weggesteuerte Luftdämpferventil in einem Zustand zeitlich nach dem unteren Wendepunkt des Einfederwegs x. Der Ventilkörper 212 bewegt sich in Richtung der Bodenplatte des Ventilgehäuses 214 und befindet sich gerade in einer Mittelstellung innerhalb des Ventilgehäuses 214. Die Ventilöffnungen und die Durchgangsöffnungen sind zueinander ausgerichtet, so dass das Dämpferventil geöffnet ist. Durch die Ventilöffnungen und die Durchgangsöffnungen ist ein Fluidstrom möglich, der durch die Pfeile angedeutet ist. Der Fluidstrom ermöglicht einen Druckausgleich zwischen dem Innenraum des Zusatzvolumens 210 und dem Innenraum 310 der Luftfeder. In dem in Fig. 10 gezeigten Zustand bleiben die Trommeln 918 aufgrund der zwischen ihnen auftretenden Haftreibung im Stillstand, so dass sich eine Seillänge der Zugseile 216 nicht verändert. Eine Annäherung des Ventilgehäuses 212 an die Deckelplatte 204 wird dadurch ausgeglichen, dass sich der Ventilkörper 214 relativ zu dem Ventilgehäuse 212 bewegt.

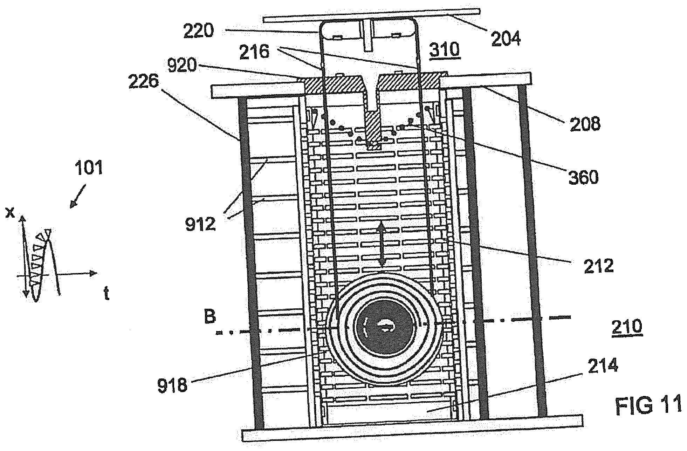

Fig. 11 zeigt das in Fig. 10 gezeigte weggesteuerte Luftdämpferventil in einem Zustand vor oder an einem oberen Wendepunkt, bei dem das Dämpferventil seine geringste Längenausdehnung aufweist. Der Ventilkörper 212 ist so weit es möglich ist in Richtung der Bodenplatte des Ventilgehäuses 214 ausgelenkt und liegt an dieser oder einem entsprechendem Anschlag an. Das Dämpferventil ist geschlossen. Der sich gegenüber dem in Fig. 10 gezeigten Zustand verringerte Abstand zwischen dem Ventilgehäuse 212 und der Deckelplatte 204 führt dazu, dass die Zugseile 216 auf die Trommeln 918 aufgewickelt wurden.

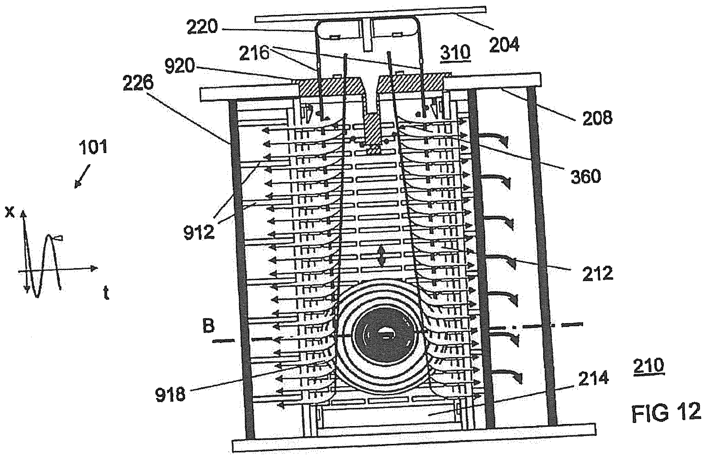

Fig. 12 zeigt das in Fig. 11 gezeigte weggesteuerte Luftdämpferventil in einem Zustand zeitlich nach dem oberen Wendepunkt des Einfederwegs x. Der Ventilkörper 212 bewegt sich in Richtung der Abdeckung 920 und befindet sich gerade in einer Mittelstellung innerhalb des Ventilgehäuses 214. Die Ventilöffnungen und die Durchgangsöffnungen sind zueinander ausgerichtet, so dass das Dämpferventil geöffnet ist. Durch die Ventilöffnungen und die Durchgangsöffnungen ist ein Fluidstrom möglich, der durch die Pfeile angedeutet ist. Der Fluidstrom ermöglicht einen Druckausgleich zwischen dem Innenraum des Zusatzvolumens 210 und dem Innenraum 310 der Luftfeder. In dem in Fig. 12 gezeigten Zustand bleiben die Trommeln 918 aufgrund der zwischen ihnen auftretenden Haftreibung im Stillstand, so dass sich eine Seillänge der Zugseile 216 nicht verändert. Eine Entfernung des Ventilgehäuses 212 von der Deckelplatte 204 wird dadurch ausgeglichen, dass sich der Ventilkörper 214 relativ zu dem Ventilgehäuse 212 bewegt.

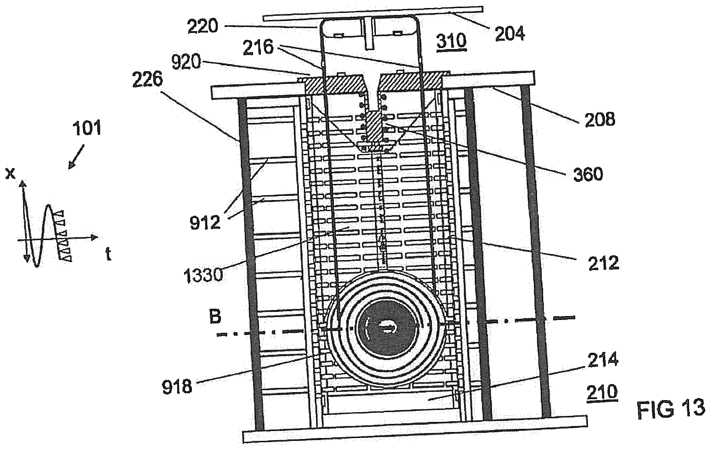

Fig. 13 zeigt das in Fig. 12 gezeigte weggesteuerte Luftdämpferventil in einem Zustand vor oder an einem weiteren unteren Wendepunkt. Der Ventilkörper 212 ist so weit es möglich ist in Richtung der Abdeckung 920 ausgelenkt und liegt an dieser oder einem entsprechendem Anschlag an. Das Dämpferventil ist geschlossen. Der sich gegenüber dem in Fig. 12 gezeigten Zustand vergrößerte Abstand zwischen dem Ventilgehäuse 212 und der Deckelplatte 204 führt dazu, dass die Zugseile 216 weiter von den Trommeln 918 abgewickelt wurden.

Gemäß dem in Fig. 13 gezeigten Ausführungsbeispiel weist der Ventilschieber oder Ventilkörper 214 im Inneren eine sternförmige Verrippung 1330 auf. Die Verrippung 1330 kann durch radial angeordnete Verstrebungen oder Flächenelemente realisiert sein, die einen Luftstrom durch die Abdeckung 920 hindurch, in das Innere des Ventilkörpers 214 hinein und zu den Durchlassöffnungen hin ermöglichen. Aufgrund der Verrippung 1330 kann die Druckfeder 360 als Schraubenfeder ausgeführt sein, die zwischen der Abdeckung 920 und einem der Abdeckung 920 zugewandten Endabschnitt der Verrippung 1330 angeordnet ist. Die Druckfeder 360 kann auf der Verrippung 1330 aufliegen. Dabei kann der Endabschnitt der Verrippung 1330 trichterförmig ausgebildet sein. Durch die Verrippung 1330 kann einer Verformung des Ventilkörpers 214 entgegengewirkt werden, die zu einer Verkantung des Ventilkörpers 214 in dem Ventilgehäuse führen könnte.

Fig. 14 zeigt eine Draufsicht entlang einer in Fig. 9 gezeigten Schnittlinie B durch das in Fig. 9 gezeigte weggesteuerte Luftdämpferventil. Die Schnittlinie B verläuft durch die Achse, auf der die zwei Trommeln 918 gelagert sind. Die zwei Trommeln 918 sind als gegenläufige Spiraltrommeln für das in den Fig. 8 bis 13 gezeigte Zugseil 216 ausgebildet. Die Achse verläuft quer durch einen Innenraum des Ventilschiebers oder Ventilkörpers 214. Die zwei Trommeln 918 sind mittig auf der Achse angeordnet und berühren sich über eine umlaufende Reibfläche 1430. Die Reibfläche kann eine Kontaktfläche von beispielsweise zwei PTFE-Ringen sein, die einander gegenüberliegend an den zwei Trommeln 918 angeordnet sind. Zwischen den Trommeln 918 und dem Ventilgehäuse 214 ist jeweils eine, beispielsweise tonnenförmige, Druck- und Spiralfeder 1432 angeordnet. Ein dem Ventilgehäuse 214 zugewandtes Ende jeder der Federn 1432 stützt sich jeweils an einem Endabschnitt der Achse ab. Durch die Federn 1432 werden die Trommeln 918 in Position gehalten. Wirkt an einem Zugseil, das auf einer der Trommeln 918 aufgewickelt ist eine Zugkraft, die zu einer Drehung der Trommel 918 führt, so wird die mit dieser Trommel 918 verbundene Feder 1432 gespannt. Entfällt die Zugkraft an dem Zugseil, so kann die gespannte Feder 1432 die Trommel 918 zurückdrehen und das Zugseil solange aufrollen, bis eine Zugkraft an dem Seil der Federkraft der Feder 1432 ausgleichend entgegensteht. Die Trommeln 918 können einen abgestuften Aufrollradius für das Zugseil aufweisen, so dass das durch das Zugseil hervorgerufene Drehmoment abhängig von einer bereits ausgeführten Drehung der Trommeln 918 der sich ändernden Rückholkraft der Triebfedern 1432 entgegenwirkt. Dadurch entsteht eine über der Zugseillänge unabhängige konstante Zugkraft.

Das Ventilgehäuse ist von der kreisförmigen Verrippung 912 zur Zylinderformstabilität umringt. Ferner ist ein Anfangsabschnitt des spiralförmigen Resonanzkörpers 224 zur Erhöhung der Dämpfleistung gezeigt.

**Fig. 15** zeigt eine Draufsicht entlang einer in Fig. 13 gezeigten Schnittlinie B durch das in Fig. 13 gezeigte weggesteuerte Luftdämpferventil. Zusätzlich zu den bereits anhand von Fig. 14 beschriebenen Merkmalen ist in Fig. 15 eine beispielsweise 8-fach sternförmige Verrippung 1330 des Ventilschiebers oder Ventilkörpers 214 gezeigt. Die Verrippung 1330 besteht aus vier bis acht in gleichem Winkel zueinander angeordneten Rippen, die sich jeweils ausgehend vom Mittelpunkt des Ventilkörpers radial zur Wand des Ventilkörpers 214 erstrecken. Die Verrippung 1330 bewirkt eine Versteifung des Ventilkörpers 214.

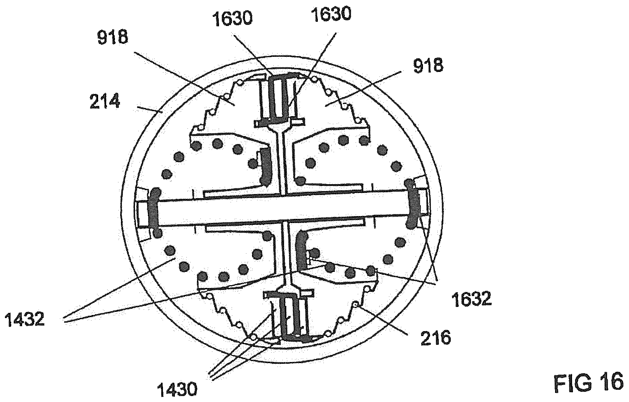

Fig. 16 zeigt eine Draufsicht entlang einer in Fig. 9 gezeigten Schnittlinie B durch das in Fig. 9 gezeigte weggesteuerte Luftdämpferventil. Im Unterschied zu dem in den Fig. 14 und Fig. 15 gezeigten Ausführungsbeispielen kann mittels des in Fig. 16 gezeigten Ausführungsbeispiels eine größere Reibkraft erzeugt werden. Gemäß diesem Ausführungsbeispiel sind drei Reibringe 1430 für eine größere, in diesem Fall dreifache, Reibung oder Reibkraft vorgesehen. Die Reibringe 1430 sind durch zwei Blechringe 1630 getrennt. Ein erster Blechring 1630 weist eine Außenfixierung an der rechts dargestellten Spiraltrommel 918 und ein zweiter Blechring 1630 weist eine Innenfixierung an der links dargestellten Spiraltrommel 918 auf. Die äußeren beiden Reibringe 1430 sind starr mit der jeweils angrenzenden Trommel 918 verbunden. Der zwischen den äußeren Reibringen 1430 angeordnete mittlere Reibring 1430 kann lose oder starr mit einem der Blechringe 1630 verbunden sein. Aufgrund der drei Reibringe 1430 kann eine durch die Federn 1432 hervorgerufene Anpresskraft reduziert werden. Zudem teilt sich die entstehende Reibung auf mehrere Flächen auf, wodurch sich die Standfestigkeit der reibenden Anordnung erhöht. Die Federn 1432 sind als beidseitig an Fixierpunkten 1632 drehfest fixierte Tonnenfedern realisiert. In Fig. 16 ist zudem ein spiralförmig aufgewickeltes Drahtseil bzw. Flachriemen 216 gezeigt.

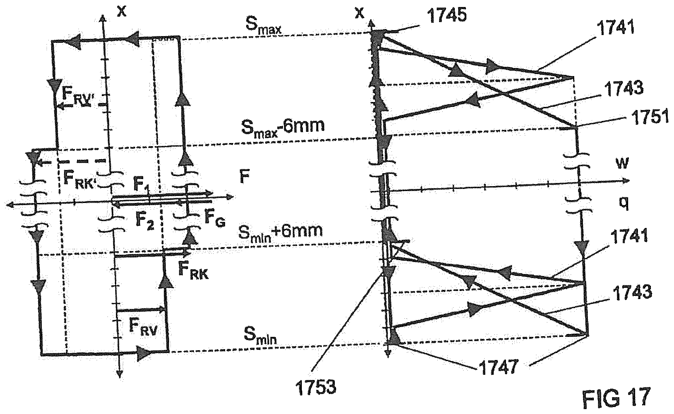

**Fig. 17** stellt ein Schaltverhalten des anhand der Fig. 8 bis 16 beschriebenen weggesteuerten Luftdämpferventil dar. Im linken Diagramm ist ein Kräfteverlauf F über den Einfederweg x in Millimetern während des Ventilschaltens gezeigt. Im rechten Diagramm ist ein Ventilschaltverhalten in Bezug auf den Weg w und den Schaltquerschnitt q über den Einfederweg x in Millimetern gezeigt.

Bezüglich des links gezeigten Kräfteverlaufs gilt:

$$F_{RK} > F_{RV} < [F_1]$$

$$F_{RK} < F_1$$

und

$$F_1 - (F_G + F_2) = 0$$

$F_1$ = wegunabhängig konstant

| | |
|---|---|
| $F_1$ | Zugkraft der Tonnenfeder über Seilzug |
| $F_G$ | Eigengewicht des Ventilschiebers |
| $F_2$ | Federkraft zur Gewichtskrafterhöhung |
| $F_{RV}$ | Reibkraft des Ventils bei Bewegung |
| $F_{RK}$ | Reibkraft der Rutschkupplung |

Im rechten Diagramm sind eine Kennlinie 1741 des Schaltquerschnitts sowie eine Kennlinie 1743 des Ventilwegs gezeigt. Die Kennlinien 1741, 1743 verlaufen zwischen einem Wegwendepunkt (WP) 1745 oben (Ventilanschlag) und einem Wegwendepunkt (WP) 1747 unten (Ventilanschlag). Dazwischen sind Ventilanschläge 1751, 1753 markiert. Das Ventil ist jeweils in einem Bereich zwischen den Wegwendepunkten 1745, 1747 und den angrenzenden Anschlägen 1751, 1753 geöffnet.

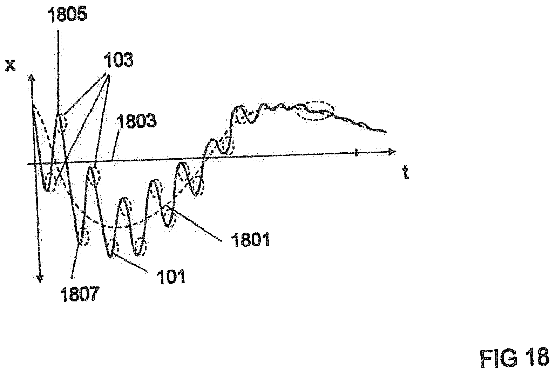

**Fig. 18** zeigt eine Aufbaudämpfung. Gezeigt ist ein Diagramm in dem ein Einfederweg x eines Ventils über die Zeit t aufgetragen ist. Eine Kennlinie 101 beschreibt einen Einfederweg 101 mit Achsschwingungen von beispielsweise 12 Hz und überlagerten Aufbauschwingungen 1801 von beispielsweise 1 Hz. Die Mittellinie 1803 kennzeichnet einen Mittelwert der Höhe des Fahrzeugaufbaus. Ein Ventilschalten 103 zum Druckausgleich erfolgt jeweils kurz nach den Wendepunkten des Einfederwegs 101. An einem oberen Totpunkt 1805 herrscht ein niedriger Differenzdruck, an einem unteren Totpunkt 1807 dagegen ein hoher Differenzdruck. Dies wirkt einer Bewegung des Aufbaus entgegen. Somit ist eine Aufbaudämpfung realisierbar. Dazu schaltet das Ventil jeweils kurz nach einem Wegwendepunkt. Unterschiedliche Differenzdrücke herrschen abhängig von einem oberen und einem unteren Totpunkt. Die Dämpfung wirkt dadurch automatisch gegenüber der Achseigenfrequenz als auch gegenüber der Aufbaufrequenz.

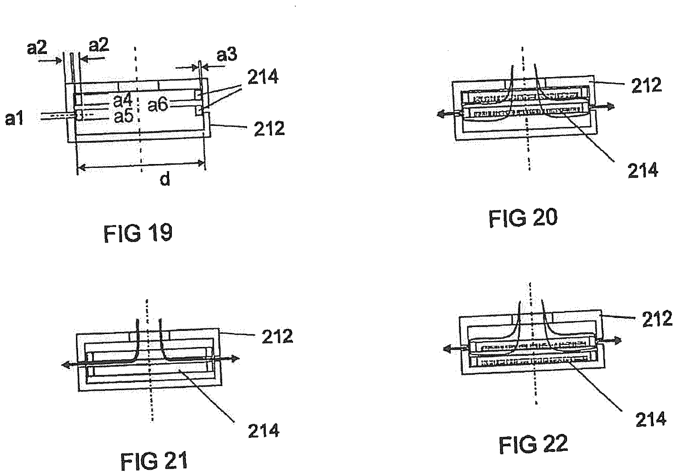

Die **Fig. 19 bis 22** zeigen Simulationsdarstellungen von Dämpferventilen. Zur Ermittlung einer Durchflussmenge und einer Leckage sind Ventildaten zur Strömungssimulation für die beiden Stellungen "Ventil geöffnet" sowie die Ermittlung des Leckageverhaltens in der Stellung "Ventil geschlossen" gezeigt. Gezeigt ist jeweils eine schematische Darstellung eines Ventilgehäuses 212 mit zwei gegenüberliegenden Ventilöffnungen und einem aus zwei Ringen bestehenden Ventilkörpers 214, zwischen denen Durchgangsöffnungen ausgebildet sind.

In Fig. 19 sind die Ventilöffnungen durch einen Ring des Ventilkörpers 214 verschlossen. Das Ventil weist beispielhaft die Abmessungen a1 = 2 mm, a2 = 2,5 mm, a3 = 0,1 mm, a4 = 4 mm, a5 = 4 mm, a6 = 2 mm und d = 50 mm. Alternativ kann das Ventil die Abmessungen a1 = 1,5 mm, a2 = 2,5 mm, a3 = 0,1 mm, a4 = 3 mm, a5 = 3 mm, a6 = 1,5 mm und d = 50 mm.

In Fig. 20 sind die Ventilöffnungen durch einen Ring des Ventilkörpers 214 verschlossen. Die Pfeile kennzeichnen Leckströme.

In Fig. 21 sind die Ventilöffnungen durch keinen Ring des Ventilkörpers 214 verschlossen. Die Pfeile kennzeichnen einen Fluidstrom durch die Ventilöffnungen.

In Fig. 22 sind die Ventilöffnungen durch einen Ring des Ventilkörpers 214 verschlossen. Die Pfeile kennzeichnen Leckströme.

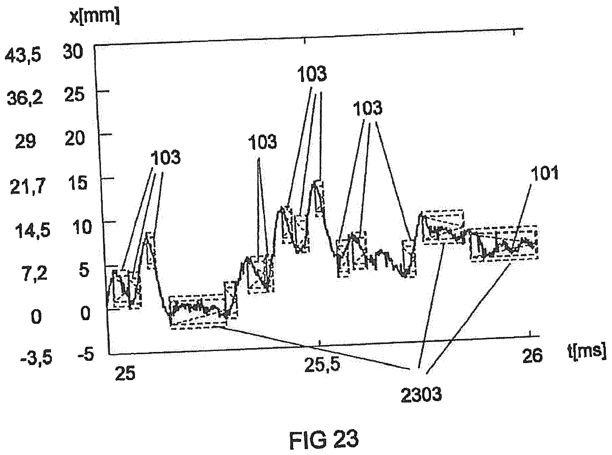

**Fig. 23** zeigt eine Darstellung von Schaltvorgängen eines weggesteuerten Dämpferventil. Das Dämpferventil kann in einer Luftfeder zwischen einem Lenker und einem Aufbau eines Fahrzeugs angeordnet sein. Gezeigt ist eine Kennlinie 101, die einen Weg x aufgetragen über die Zeit t darstellt. Bei dem Weg x kann es sich um einen Weg des Dämpfers (linkes Spalte) oder um einen Weg der Achse (rechte Spalte) handeln. Durch Kästen 103, 2303 ist ein Ventilweg und ein Schaltquerschnitt gezeigt. Mit dem Bezugszeichen 2303 ist eine weiche Feder markiert, da die Luftfeder in diesem Zeitraum mit einem externen Speicher verbunden ist.

Gemäß einem diesem Ausführungsbeispiel weist das Luftdämpferventil als Merkmale eine hohe Dämpfleistung durch einen großen Schaltquerschnitt von ca. 100 cm<2>, dies entspricht einem Lochdurchmesser von 113 mm bei Ventilmaßen d = 11 cm, h = 10 cm, bzw. d = 6 cm, h = 18 cm. Damit ist der schaltbare Querschnitt ca. 10-fach größer als bei einem elektrischen Ventil maximal denkbar. Ein zuverlässiges Ventilschalten erfolgt kurz nach dem oberen bzw. unteren Wegwendepunkt. Ein kurzer Schaltweg erfolgt nach dem Wegwendepunkt. Bereits nach 3 mm Dämpferweg ist das Ventil voll geöffnet und bereits nach 5 mm wieder komplett geschlossen. Eine Schaltwegverringerung entsteht durch eine Hebelwirkung am Lenker. Bereits nach 2 mm Achsweg ist das Ventil voll geöffnet und bereits nach 3,45 mm wieder komplett geschlossen. Es besteht keine Schaltbeeinträchtigung durch Massenträgheit. Das sich bewegende Ventilgehäuse ist mit der Achse verbunden, während der Ventilschieber mit dem Aufbau verbunden ist. Es erfolgt ein druckneutrales Ventilschalten nach dem Prinzip des Ventilschiebers. Dadurch ergeben sich ein ruhiger Aufbau bei kleinen Anregungen durch Fahrbahnunebenheiten und eine weiche Federung, da das Luftfedervolumen mit dem externen Speicher nicht verbunden ist, wodurch sich keine Dämpfung ergibt. Eine hohe Robustheit ist gegeben, wodurch hohe Schaltzyklen möglich sind. Aufgrund eines frequenzunabhängigen Schaltens ist auch eine Bedämpfung des Fahrzeugaufbaus möglich

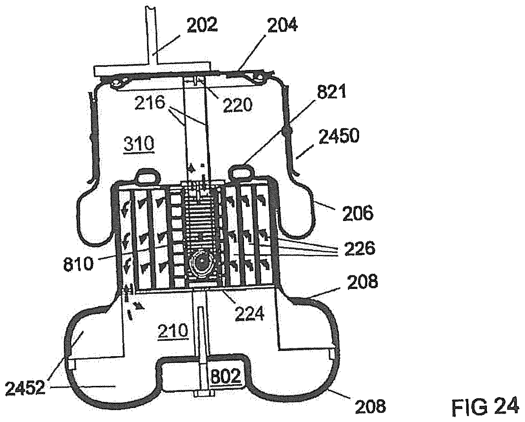

**Fig. 24** zeigt eine Darstellung einer Luftfeder.

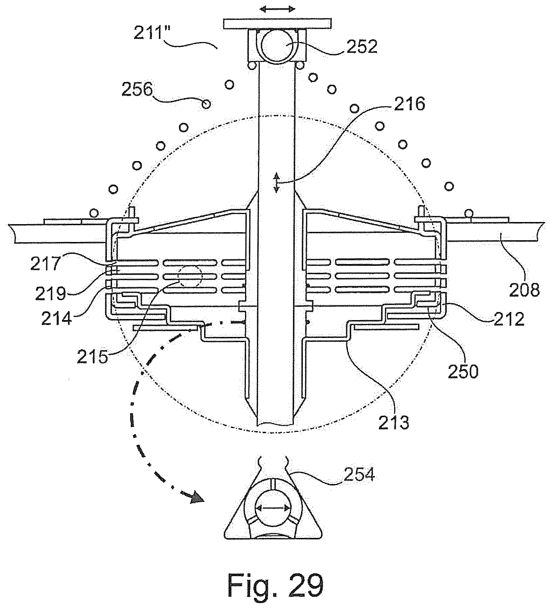

Die Luftfeder kann zwischen einem Längsträger 202 eines Fahrzeugaufbaus und einem mit einer Achse verbundenen Lenker 802 eines Fahrzeugs angeordnet werden. Die Luftfeder weist eine Deckelplatte 204 der Luftfeder mit einer seitlichen Volumenminimierung mittels einer Blechmanschette 2450, einen Luftfederbalg 206 und einen Luftfedertopf 208 auf. Der Luftfedertopf 208 weist ein Unterteil und ein Oberteil auf. Das Unterteil liegt auf dem Lenker 802 auf. Innerhalb der Luftfeder ist ein weggesteuertes Luftdämpferventil 810 angeordnet. Das Luftdämpferventil 810 ist in den Luftfedertopf 208 eingelassen und sitzt auf einem Zwischenboden 224 in Form einer Blechplatte des Luftfedertopfs 208 auf. Das Ventilgehäuse 212 ist von einem spiralförmigen Strömungskanal 226 zur Erhöhung der Dämpfungsleistung umringt. Wenn die Luftfeder einfedert, das heißt dass ein Abstand zwischen der Deckelplatte 204 und dem Luftfedertopf 208 verringert wird, und das Luftdämpferventil geöffnet ist, kann ein Luftstrom, wie durch die Pfeile angedeutet, aus dem Luftfederbalg 206 in das Luftdämpferventil 810 einströmen und durch das Luftdämpferventil 810 hindurch in den Strömungskanal 226 strömen. Über den Strömungskanal 226 erreicht der Luftstrom den Luftfedertopf 208 und ändert hier ein Druckniveau 210 eines externen Speichers oder externen Volumens, das mit der Achsbewegung gekoppelt ist. Um ein direktes Aufschlagen der Deckelplatte 204 auf den Luftfedertopf 208 zu vermeiden, ist auf einer der Deckelplatte 204 zugewandten Seite des Luftfedertopfs 208 ein Anschlagpuffer 821 angeordnet. Ferner weist der Luftfederbalg 206 eine Blechmanschette 2450 zur Volumenminimierung auf. Durch diese Volumenminimierung kann eine weitere Steigerung der Dämpfleistung erreicht werden. Ein Ventilkörper des Luftdämpferventils 810 ist über zwei Zugseile, ein wie in Figur 29 gezeigtes gegen die Deckelplatte 204 drückendes Koppelelement 216 oder Riemen 216 mittels einer selbsteinrastenden Seilbefestigung 220 mit der Deckelplatte 204 verbunden. Sternförmige senkrechte Zwischenstege 2452 sind zur Erhöhung der Druckfestigkeit sowie zur Sicherung der Stützlast des Luftfedertopfes 208 vorgesehen. Zur weiteren Steigerung der Luftdämpferleistung kann der Luftfedertopf 208 auf eine hinsichtlich Bauraum eine maximal mögliche Größe ausgelegt werden. Hierzu ist auch möglich das Volumen der aus einem dicken Rohr bestehenden Achse zu nutzen.

Die in Fig. 24 gezeigte Ventilanordnung zeigt eine Einbaulage und Steuerung des Ventils 810 mittels zwei Zugseilen 216. Ein innerer Ventilkörper 214, wie er beispielsweise in Fig. 9 gezeigt ist, versucht einen konstanten Abstand gegenüber einem Fahrzeug-Aufbau zu halten. Dabei besteht eine konstante wegunabhängige Zugkraft der Zugseile 216. Zwei Spiraltrommeln 918 kompensieren eine Kraftzunahme infolge einer Federrate mittels einer Anpassung des Radius der Seiltrommel. Ein Ventilinnenraum dient als Verbindungsleitung. Luft im Innenraum 310 des Federbalgs gelangt hierüber zu den Ventilschlitzen. Eine Blechmanschette 2450 ist zur Dämpfleistungserhöhung vorgesehen und bewirkt eine Volumenminimierung und Erhöhung der Steifigkeit. Ein Strömungskanal 226 ist zur Dämpfleistungserhöhung vorgesehen. Aus dem Ventil austretende Luft wird in den spiralförmigen Strömungskanal 226 geleitet und gelangt erst anschließend in den externen Speicher. Die Massenträgheit strömender Luft im Strömungskanal 226 bewirkt durch eine Sogwirkung eine bessere Entleerung bzw. Befüllung des Federbalgs 206. Dadurch ergibt sich eine mögliche Leistungssteigerung der Dämpfung.

Fig. 25 zeigt eine schematische Schnittdarstellung, die das erfindungsgemäße Ausführungsbeispiel eines Dämpferventils 211 gemäß Fig. 2 bis 4 näher konkretisiert. Das Dämpferventil 211, hier im eingefederten Zustand besteht aus zwei passgenauen zylindrischen Rohrstücken (z.B. (Nenn-)Durchmesser 50 mm und Höhe 70 mm), nämlich das Ventilgehäuse 212 und der Ventilkörper 214, mit jeweils identischen waagrechten Schlitzen 217 und Stegen 219 im Schlitzbereich 215 über der gesamten Oberfläche.

Der Ventilkörper 214 (inneres Rohr) ist über eine reibende, teleskopartige oder abhebende Stabverbindung mit dem Fahrzeugaufbau verbunden. Diese Stabverbindung besteht aus der Ventilsteuerstange 216 bzw. dem Koppelelement 216 und dem Befestigungselement 218 bzw. der reibenden Verbindung 218.

Das Dämpferventil weist einen Ventilverstellweg von 6 mm auf.

Im Schlitzbereich beträgt die Schlitzbreite für das Ventilgehäuse 212 und den Ventilkörper 214 jeweils 2 mm und die Stegbreite 4 mm.

Das Dämpferventil 211 weist einen Ventilboden 213 auf, der mit dem Ventilgehäuse 212 und dem Ventilkörper 214 verbunden ist.

Der Ventilboden 213 ist druckabhängig verstellbar, nämlich abhängig vom Differenzdruck höhenverstellbar, und verhindert das vorzeitige Schließen des Ventils, bis der Druckausgleich abgeschlossen ist.

Weiter weist der Ventilboden 213 eine Führung 240 auf, in der der Ventilkörper 214 geführt ist. Diese Führung 240 weist einen Kragen 242 auf, der den Ventilkörper 214 zumindest teilweise umgreift.

Der Ventilboden 213 weist weiter einen Ventilgehäusekragen 244 auf, der das Ventilgehäuse 212 zumindest teilweise umgreift.

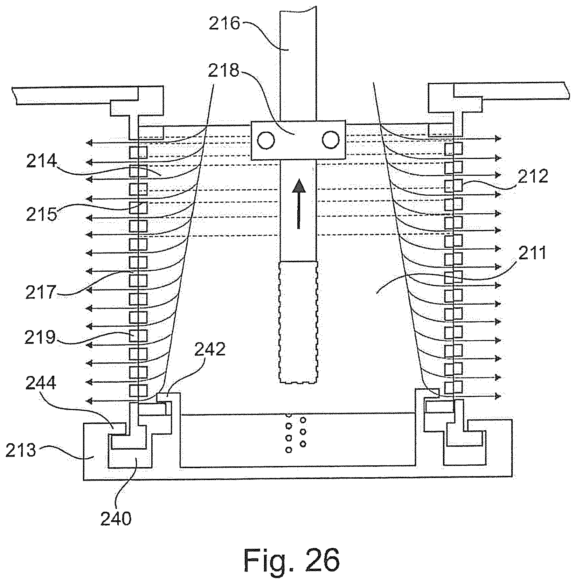

Fig. 26 zeigt das in Fig. 25 gezeigte Dämpferventil 211 im geöffneten Zustand. Die Luftfeder ist eingefedert. Damit hat der Innenraum sein kleinstes Volumen und beginnt sich wieder zu vergrößern. Entsprechend ist der Luftdruck im Innenraum 310 größer als im externen Volumen 210. Die Pfeile symbolisieren den Luftstrom aus dem Dämpferventil 211. Der Druckausgleich hat begonnen, ist jedoch noch nicht abgeschlossen. Das Koppelelement 216 bewegts ich dem Aufbau folgend zwar nach oben, wird jedoch vom Ventilgehäusekragen 244 gehindert, das Ventil wieder zu schließen.

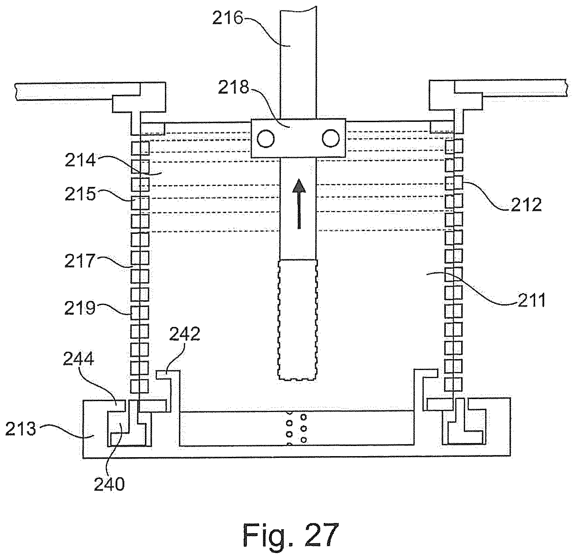

Fig. 27 zeigt das in Fig. 25 und 26 gezeigte Dämpferventil 211 im ebenfalls noch eingefederten Zustand, jedoch ist nunmehr der Druckausgleich abgeschlossen. Der Druck im externen Volumen beginnt zu steigen, so dass sich der Ventilboden 213 nach oben gegen dessen obere Wegbegrenzung bewegt. Da sich das Koppelelement 216 nach oben bewegt, wird sich das Ventil nunmehr wieder schließen, indem der Ventilkörper 214 mit nach oben gegen seine obere Begrenzung gezogen wird.

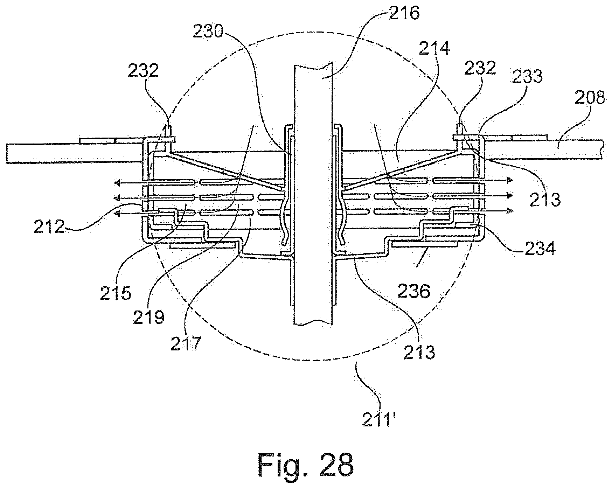

**Fig. 28** zeigt in schematischer Schnittdarstellung eine weitere Ausführungsform eines Dämpferventils 211' in ausgefederter Stellung. Entsprechend wird der Ventilboden 213 gegen seinen oberen Anschlag oben gedrückt. Vergleichbare oder identische Elemente sind mit identischem Bezugszeichen versehen. Das Dämpferventil 211' kann im Wesentlichen sämtliche strukturelle und funktionalen Merkmale, allein oder in Kombination, soweit sinnvoll und möglich, wie das Dämpferventil 211 aufweisen (und auch umgekehrt). Auch die Verwendung kann identisch sein.

Durch die Möglichkeit eines verlängerten Öffnens bis zum erfolgten Druckausgleich kann das Ventil in dieser Ausführungsform hinsichtlich seiner Größe bzw, seinem schaltbaren Querschnitt deutlich kleiner ausgelegt werden. Dies spart Materialkosten und verringert die Leakage im geschlossenen Zustand. Auch vergrößert sich dadurch das externeVolumen 210 was ebenfalls zu einer Steigerung der Dämpferleistung führt.

Das Dämpferventil 211' besteht hier aus drei Tiefziehteilen (Ventilgehäuse 212 oder Außentopf, Ventilkörper 214 oder Innentopf und Ventilboden 213), einem Gleitlager 230 und einer Ventilsteuerstange 216 mit einer konischen Feder.

Der Außen- und Innentopf des Ventilelements besitzt jeweils waagrecht angeordnete, z.B. drei umlaufende mit Laser geschnittene Schlitze 217 (Schaltquerschnitt z.B. ca. 570 mm2 bei eine Durchmesser von 27 mm) mit zugehörigen Stegen 219 und passgenaue Dichtfläche.

Am Luftfedertopf bildet eine umgebogene Lasche 233 zusammen mit einer Lasche 232 einen Verdrehschutz nach erfolgter Montage.

Die Lasche 234 des inneren Ventilelements 214 dient als unterer sowie oberer Anschlag gegenüber dem Ventilgehäuse 212 bzw. dem Ventilboden 213.

Das Kunststoffgleitlager 230 führt und steuert das bewegliche innere Ventilelement 214 und wird im geschlitzten Bereich 215 durch eine Federkraft gegen die Steuerstange 216 gedrückt, wodurch eine dauerhafte Mindestreibung sichergestellt wird.

Die Stegbreite beträgt 3 mm und es sind drei Schlitze 217 mit je 1,5 mm vorgesehen, sowohl beim Ventilgehäuse 212 als auch beim Ventilkörper 214.

Der Ventilboden 213 ist als Tiefziehteil, nämlich als Tiefzieblech mit einer angeschweißten Ringscheibe ausgebildet.

Für den Ventilboden 213 ist ein Anschlag 236 vorgesehen.

**Fig. 29** zeigt eine weitere Ausführungsform eines Dämpferventils 211", die auch eine sogenannte vibrationsfeste Ausführungsform genannt wird. Das Dämpferventil 211" kann im Wesentlichen sämtliche strukturelle und funktionalen Merkmale, allein oder in Kombination, soweit sinnvoll und möglich, wie das Dämpferventil 211 oder das Dämpferventil 211' aufweisen (und auch umgekehrt). Auch die Verwendung kann identisch sein. Vergleichbare oder identische Elemente sind mit identischem Bezugszeichen versehen.

Die in Fig. 29 gezeigte Form eines Dämpferventils 211'' basiert auf der in Fig. 28 basierten Ausführungsform und weist zusätzlich eine gewellte Feder 250 zur Eigengewichtskompensation auf. Darüber hinaus ist an der Ventilsteuerstange 216 ein Kugellager 252 gegen Querbewegungen vorgesehen. Außerdem ist eine Feder 254 zur Sicherstellung der Mindestreibung vorgesehen. Darüber hinaus ist an dieser Lagerstelle eine Druckfeder 256 vorgesehen, die sich zudem auf einem Ansatz des Ventilgehäuses abstützt. Diese Druckfeder 256 oder Drahtfeder dient zur Einkopplung der Einfederbewegungen des Koppelelements gegenüber dem Aufbau mit seinem Längsträger 202. Dabei wird mit Hilfe der Feder 256 das Lager 252 gegen die Deckelplatte 204 gedrückt. Im Falle eines gewünschten Hochniveaus während der Be- und Entladung löst sich das Lager 252 nach Erreichen der maximalen Länge des Koppelelements 216 gegenüber dem Ventilelement 214 von der Deckelplatte 204. Das Koppelelement muss mit seiner maximalen Länge lediglich innerhalb des Fahrniveaus eine Verbindung zum Längsträger 202 aufweisen und benötigt dadurch keine teleskopisch verlängernde Funktion.

Das innere Ventilelement 214 bzw. der Ventilkörper und der Ventilboden 213 sind hier über je ein Gleitlager mit der Ventilsteuerstange 216 verbunden.

Bei kleinen Amplituden (z.B. durch Motorvibration) sind Ventilelement 214 und Ventilboden 213 in Mittelposition:
Beide Elemente regeln sich in der Mittelposition ein. Das Ventilelement 214 und der Ventilboden 213 sind fest mit der Ventilsteuerstange 216 verbunden (ohne Gleitreibung). Dadurch kommt es zu einer deutlich reduzierten Anzahl an Gleitbewegungen, was zu einer Erhöhung der Lebensdauer der beiden Gleitlager führt.

Bei größeren Amplituden verschieben sich Ventilelement 214 und Ventilboden 213 bis zum jeweiligen Anschlag.

Darüber hinaus wird ein Verkanten des Ventilelements 214 verhindert, nämlich durch eine enge Führung durch ein Gleitlager und eine leichte Wölbung im Dichtbereich des Ventils.

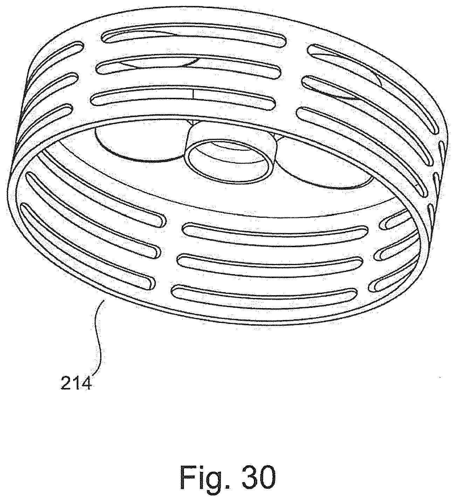

**Fig. 30** zeigt das innere Ventilelement 214 in räumlicher Darstellung.

Die Funktion des Dämpferventils 211 lässt sich wie folgt beschreiben:
Ein Luftfederbalg 206 (vgl. Fig. 24) ist über ein vorstehend beschriebenes Dämpferventil mit einem großen Schaltquerschnitt an einen externen Speicher (z.B. Luftfedertopf 208) gekoppelt.

Das weggesteuerte Dämpferventil 211 (siehe z.B. Fig. 25 bis 27) öfnet nach jeder Richtungsänderung des Einfederwegs.

Differenzdruckabhängig schließt dieses Ventil erst nach Erreichen des Druckausgleichs.

Die maximale Dämpfleistung wird erreicht bei einem Druckausgleich zwischen beiden Speichern im Moment der jeweils größten Wegauslenkung bei einem größtmöglichen externen Volumen.

Somit kommt das druck-wegabhängige Dämpferventil 211 mit seinem großen Schaltquerschnitt der idealen Maximaldämpfleistung sehr nahe.

Ein derartiges Luft-Feder-Dämpfermodul (LFD) kann neben der Dämpfung eines Fahrzeugaufbaus beispielsweise auch als Niveauregelung für die Kabinenlagerung von Nutzfahreugen verwendet werden.

Bestandteil eines derartigen LFD-Moduls sind die Luftfeder, der Luftdämpfer mit wegdruck-gesteuertem Schaltventil, eine integrierte Niveauerfassung und -regelung mit hydraulischem Tiefpass und Schaltschwellen-Adaption (ggf. mit bekanntem Funktionsprinzip).

Das Niveauregelgehäuse kann aus zwei identischen Gehäusehälften bestehen und ist hierdurch kosten- und einbauraumoptimiert.

Die Niveauregelung für die Kabinenlagerung weist als Funktionsbestandteile einen hydraulischen Dämpfer auf, der nur langsame Bewegungen erlaubt. Die Schaltschwellen (Ein- und Auslass) können separat eingestellt werden. Denkbar ist in diesem Zusammenhang, dass das Gehäuse aus zwei identischen Gehäusehälften mit je einer Zylinderhälfte und einem Ventilelement besteht.

Durch den beweglichen Ventilboden 213 wird erreicht, dass auch bei großen auszugleichenden Bewegungen, d.h. beispielsweise in Fällen in denen aufgrund großer Schwingungsamplitude eine hohe Dämpfungsleistung erforderlich ist und ein Hub des Dämpfungselements von wenigen Milimetern nicht ausreicht, ausreichend Luft ausgeglichen werden kann. So ermöglicht der bewegliche Ventilboden 213 einen Ausgleich von einer vergleichsweise größeren Menge an Dämpfungsmedium als dies normalerweise über die Schlitze 217 des Dämpferventils 211 möglich wäre.

Insbesondere verhält es sich so, dass durch den beweglichen Ventilboden 213 das Dämpferventil 211 so lange geöffnet ist, bis der Druckausgleich vorgenommen wurde. Der Ventilboden 213 ist abhängig vom Differenzdruck höhenverstellbar und verhindert so ein vorzeitiges Schließen des Dämpferventils 211, bis der Druckausgleich abgeschlossen worden ist.

Grundsätzlich ermöglicht die vorstehend beschriebene Gestaltung des Dämpferventils 211 auch eine Verkleinerung des Querschnitts des Ventilkörpers 214 bei gleicher bzw. vergleichbarer Dämpfungsleistung des Dämpferventils 211 verglichen mit herkömmlichen Dämpferventilen.

Insgesamt wird es dadurch möglich, die Materialkosten zu senken und Leckagen zu verringern.

Die beschriebenen Ausführungsbeispiele sind nur beispielhaft gewählt und können miteinander kombiniert werden.

BEZUGSZEICHENLISTE

| | |
|---|---|
| 101 | Kennlinie |
| 103 | Schaltpunkte |
| 202 | Längsträger |
| 204 | Deckelplatte |
| 206 | Luftfederbalg |
| 208 | Luftfedertopf |
| 210 | externes Volumen |
| 211 | Dämpferventil |
| 211' | Dämpferventil |
| 211" | Dämpferventil |
| 212 | Ventilgehäuse |
| 213 | Ventilboden |
| 214 | Ventilkörper |
| 215 | Schlitzbereich |
| 216 | Koppelelement |
| 217 | Schlitz |
| 218 | Befestigungselement |
| 219 | Steg |
| 220 | drehbare Befestigung |
| 222 | Achse |
| 224 | Zwischenboden |
| 226 | spiralförmiger Strömungskanal |
| 228 | Verrippung230 Gleitlager |
| 239 | Kunststoffgleitlager |
| 232 | Lasche |
| 234 | Lasche |
| 236 | Anschlag |
| 240 | Führung |
| 242 | Kragen |
| 244 | Ventilgehäusekragen |
| 250 | Feder |
| 252 | Lager |
| 254 | Feder |
| 256 | Druckfeder |
| 310 | Innenraum |
| 336 | Anschlag |
| 338 | Anschlag |
| 340 | Druckfeder |
| 342 | maximale Eintauchtiefe |
| 344 | Schlitzbreite |
| 346 | Verstellweg |
| 348 | Stegbreite |
| 350 | Stegabstand |
| 360 | Druckfeder F2 |
| 802 | Lenker |
| 810 | Ventil |
| 821 | Puffer |
| 912 | Verrippung |
| 918 | Spiraltrommel |
| 920 | Abdeckung |
| 1330 | Verrippung |

1430 Reibfläche
1432 Triebfedern
1630 Blechringe
1632 Fixierung
1741 Schaltquerschnitt
1743 Ventilweg
1745 Wendepunkt
1747 Wendepunkt
1751 Anschlag
1753 Anschlag
1801 Aufbauschwingungen
1803 Mittellinie
1805 Oberer Totpunkt
1807 Unterer Totpunkt
2303 weiche Feder
2450 Blechmanschette
2452 Zwischenstege

**Patentansprüche**

1. Dämpferventil (211) zum Dämpfen einer Relativbewegung zwischen einer ersten Masse und einer zweiten Masse, mit folgenden Merkmalen:

   einem Ventilgehäuse (212) mit einer Gehäusewand die Ventilöffnungen aufweist, wobei das Ventilgehäuse ausgebildet ist, um mit der ersten Masse verbunden zu werden;
   einem Ventilkörper (214) der Durchgangsöffnungen aufweist und innerhalb des Ventilgehäuses zwischen einer ersten Auslenkungsposition und einer zweiten Auslenkungsposition beweglich angeordnet ist, wobei die Durchgangsöffnungen so angeordnet sind, dass die Ventilöffnungen durch den Ventilkörper verschlossen sind, wenn der Ventilkörper zu der ersten oder der zweiten Auslenkungsposition hin ausgelenkt ist und sich die Ventilöffnungen und die Durchgangsöffnungen zumindest teilweise überlappen, wenn sich der Ventilkörper in einer Zwischenstellung zwischen der ersten und der zweiten Auslenkungsposition befindet;
   einem Befestigungselement (218; 918), das mit dem Ventilkörper verbunden ist; und
   einem Koppelelement (216), das ein erstes Ende aufweist, das mit dem Befestigungselement verbunden ist und ein zweites Ende aufweist, das ausgebildet ist, um mit der zweiten Masse verbunden zu werden, wobei das Dämpferventil (211) einen Ventilboden (213) aufweist, der mit dem Ventilgehäuse (212) und dem Ventilkörper (214) verbunden ist, **dadurch gekennzeichnet, dass** der Ventilboden (213) druckabhängig verstellbar ist.

2. Dämpferventil (211) nach Anspruch 1,
   **dadurch gekennzeichnet, dass**
   der Ventilboden (213) eine Führung (240) aufweist, in der der Ventilkörper (214) geführt ist.

3. Dämpferventil (211) nach Anspruch 2,
   **dadurch gekennzeichnet, dass**
   die Führung (240) einen Kragen (242) aufweist, der den Ventilkörper (214) zumindest teilweise umgreift.

4. Dämpferventil (211) nach einem der vorhergehenden Ansprüche,
   **dadurch gekennzeichnet, dass**
   der Ventilboden (213) einen Ventilgehäusekragen (244) aufweist, der das Ventilgehäuse (212) zumindest teilweise umgreift.

5. Dämpferventil (211) nach einem der vorhergehenden Ansprüche,
   **dadurch gekennzeichnet, dass**
   der Ventilboden (213) als Tiefziehteil ausgebildet ist.

6. Dämpferventil (211) nach einem der vorhergehenden Ansprüche,
   **dadurch gekennzeichnet, dass** ein Gleitlager, insbesondere Kunststoffgleitlager, vorgesehen ist, mittels dessen der Ventilkörper führbar und/oder steuerbar ist.

7. Dämpferventil (211") nach einem der vorhergehenden Ansprüche,
   **dadurch gekennzeichnet, dass**
   das Dämpferventil (211") mittels eines Koppelelements (216) steuerbar ist, wobei das Koppelelement (216) mittels einer Feder (256) gegen die zweite Masse (202) gedrückt wird.

8. Dämpferventil (211") nach Anspruch 7,
   **dadurch gekennzeichnet, dass**
   sich das Koppelelement (216') bei Verlassen eines normalen Fahrniveaus in ein Hochniveau von einer Deckelplatte (204) löst.

9. Luftfeder zum Dämpfen einer Relativbewegung zwischen einer ersten Masse (802) und einer zweiten Masse (202), mit folgenden Merkmalen:

   einem starren Fluidbehälter (208) und einem flexiblen Fluidbehälter (206), die so zwischen der ersten Masse und der zweiten Masse angeordnet werden können, dass der starre Fluidbehälter mit der ersten Masse und ein starrer Randbereich (204) des flexiblen Fluidbehälters mit der zweiten Masse verbunden ist; und
   einem Dämpferventil (211) gemäß einem der vorangegangenen Ansprüche, das in einem Übergangsbereich zwischen dem starren Fluidbehälter und dem flexiblen Fluidbehälter angeordnet ist, wobei ein Fluidstrom zwischen dem ersten Fluidbehälter und dem zweiten Fluidbehälter möglich ist, wenn sich die Ventilöffnungen und die Durchgangsöffnungen zumindest teilweise überlappen.

## Claims

1. Damper valve (211) for damping a relative movement between a first mass and a second mass, having the following features:

   a valve housing (212) with a housing wall which has valve openings, wherein the valve housing is designed to be connected to the first mass; a valve body (214) which has through-going openings and which, within the valve housing, is arranged to move between a first displacement position and a second displacement position, the through-going openings being arranged in such manner that the valve openings are closed by the valve body when the valve body is displaced to the first or second displacement position, whereas the valve openings and the through-going openings overlap at least partially when the valve body is in an intermediate position between the first and second displacement positions; a fastening element (218; 918) which is connected to the valve body, and a coupling element (216) which has a first end connected to the fastening element and a second end which is designed to be connected to the second mass, wherein the damping valve (211) has a valve base (213) which is connected to the valve housing (212) and to the valve body (214), **characterised in that** the valve base (213) can be adjusted as a function of the pressure.

2. Damper valve (211) according to Claim 1, **characterised in that** the valve base (213) has a guideway (240) in which the valve body (214) is guided.

3. Damper valve (211) according to Claim 2, **characterised in that** the guideway (240) has a collar (242) which surrounds the valve body (214) at least partially.

4. Damper valve (211) according to any of the preceding claims, **characterised in that** the valve base (213) has a valve housing collar (244), which surrounds the valve housing (212) at least partially.

5. Damper valve (211) according to any of the preceding claims,

   **characterised in that** the valve base (213) is a deep-drawn component.

6. Damper valve (211) according to any of the preceding claims, **characterised in that** a slide bearing, in particular a plastic slide bearing is provided, by means of which the valve body can be guided and/or controlled.

7. Damper valve (211") according to any of the preceding claims, **characterised in that** the damper valve (211") can be controlled by means of a coupling element (216), the said coupling element (216) being pressed against the second mass (202) by a spring (256).

8. Damper valve (211") according to Claim 7, **characterised in that** the coupling element (216') is released by a coverplate (204) when changing from a normal driving level to a high level.

9. Air spring for damping a relative movement between a first mass (802) and a second mass (202), having the following features:

   a rigid fluid container (208) and a flexible fluid container (206), which can be arranged between the first mass and the second mass in such manner that the rigid fluid container is connected to the first mass and a rigid rim area (204) of the flexible fluid container is connected to the second mass; and a damper valve (211) according to any of the preceding claims is arranged in a transition zone between the rigid fluid container and the flexible fluid container, and a fluid flow can take place between the first fluid container and the second fluid container when the valve openings and the through-going openings overlap at least partially.

## Revendications

1. Valve (211) d'amortissement pour amortir un déplacement relatif entre une première masse et une deuxième masse, ayant les caractéristiques suivantes :

   un corps (212) de valve ayant une paroi, qui a des ouvertures de valve, le corps de la valve étant constitué pour être relié à la première masse, un obturateur (214), qui a des ouvertures de passage et qui est disposé à l'intérieur du corps de la valve en étant mobile entre une première position de déviation et une deuxième position de déviation, les ouvertures de passage étant disposées de manière à ce que les ouvertures de la valve soient fermées par l'obturateur, lorsque l'obturateur est dévié vers la première ou la deuxième position de déviation, et de manière à ce que les ouvertures de la valve et les ouvertures de passage se chevauchent, au moins en partie, lorsque l'obturateur se trouve dans une position intermédiaire entre la première et la deuxième positions de déviation ;
un élément (218; 918) de fixation, qui est relié à l'obturateur, et un élément (216) de couplage, qui a une première extrémité reliée à l'élément de fixation et une deuxième extrémité constituée pour être reliée à la deuxième masse,
dans laquelle
la valve (211) d'amortissement a un plateau (213) de valve, qui est relié au corps (212) de la valve et à l'obturateur (214),
**caractérisée en ce que**
le plateau (213) de la valve est réglable en fonction de la pression.

2. Valve (211) d'amortissement suivant la revendication 1,
**caractérisée en ce que**
le plateau (213) de la valve a un guidage (240), dans lequel l'obturateur (214) est guidé.

3. Valve (211) d'amortissement suivant la revendication 2,
**caractérisée en ce que**
le guidage (240) a un collet (242), qui entoure, au moins en partie, l'obturateur (214).

4. Valve (211) d'amortissement suivant l'une des revendications précédentes,
**caractérisée en ce que**
le plateau (213) de la valve a un collet (244) de corps de valve, qui entoure, au moins en partie, le corps (212) de la valve.

5. Valve (211) d'amortissement suivant l'une des revendications précédentes,
**caractérisée en ce que**
le plateau (213) de la valve est constitué sous la forme d'une pièce à emboutissage profond.

6. Valve (211) d'amortissement suivant l'une des revendications précédentes,
**caractérisée en ce qu'**il est prévu un palier lisse, notamment un palier lisse en matière plastique, au moyen duquel l'obturateur peut être guidé et/ou commandé.

7. Valve d'amortissement suivant l'une des revendications précédentes,
**caractérisée en ce que**

la valve (211") d'amortisseur peut être commandée au moyen d'un élément (213) de couplage, l'élément (216) de couplage étant repoussé sur la deuxième masse (202) au moyen d'un ressort (256).

8. Valve d'amortissement suivant la revendication 1,
**caractérisée en ce que**
l'élément (216') de couplage se détache d'un plateau (204) de couvercle, lorsqu'il quitte un niveau de marche normal pour passer à un niveau haut.

9. Ressort pneumatique pour amortir un déplacement relatif entre une première masse (802) et une deuxième masse (202), ayant les caractéristiques suivantes :

un récipient (208) rigide de fluide et un récipient (206) souple de fluide, qui peuvent être disposés entre la première masse et la deuxième masse, de manière à ce que le récipient rigide de fluide soit relié à la première masse et une partie (204) rigide de bord du récipient souple de fluide à la deuxième masse et
une valve (211) d'amortissement suivant l'une des revendications précédentes, qui est disposée dans une région de transition entre le récipient rigide de fluide et le récipient souple de fluide, un courant de fluide entre le premier récipient de fluide et le deuxième récipient de fluide étant possible, lorsque les ouvertures de la valve et les ouvertures de passage se chevauchent, au moins en partie.

FIG 1

FIG 2

FIG 3

FIG 4

FIG 5

FIG 6

FIG 7

FIG 8

FIG 9

FIG 10

FIG 11

FIG 12

EP 3 353 444 B1

FIG 13

FIG 14

FIG 15

FIG 16

FIG 17

FIG 18

FIG 20

FIG 22

FIG 19

FIG 21

FIG 23

FIG 24

Fig. 25

Fig. 26

Fig. 27

Fig. 28

Fig. 29

214

Fig. 30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007056687 A1
- DE 10250143 A1
- DE 4327585 A1
- DE 102010045567 B4
- WO 2013181241 A1
- US 2007023981 A1